# EUROPEAN PATENT SPECIFICATION

(11) **EP 3 539 887 B1**
(45) Date of publication and mention of the grant of the patent: **26.05.2021**
(21) Application number: 18162361.2
(22) Date of filing: 16.03.2018
(51) Int. Cl.: B65D 1/02, C09D 4/00

(54) **HOLLOW BODY, IN PARTICULAR FOR PACKAGING A PHARMACEUTICAL COMPOSITION, HAVING A LAYER OF GLASS AND A SURFACE REGION WITH A CONTACT ANGLE FOR WETTING WITH WATER**
HOHLKÖRPER, INSBESONDERE ZUM VERPACKEN EINER PHARMAZEUTISCHEN ZUSAMMENSETZUNG, MIT EINER SCHICHT AUS GLAS UND EINEM OBERFLÄCHENBEREICH MIT EINEM KONTAKTWINKEL ZUM BENETZEN MIT WASSER
CORPS CREUX, EN PARTICULIER POUR L'EMBALLAGE D'UNE COMPOSITION PHARMACEUTIQUE, AYANT UNE COUCHE DE VERRE ET UNE RÉGION DE SURFACE COMPORTANT UN ANGLE DE CONTACT POUR LE MOUILLAGE À L'EAU

(43) Date of publication of application: 18.09.2019
(73) Proprietor: Schott AG, 55122 Mainz (DE)
(72) Inventor: Mangold, Stephanie, 55270 Klein-Winternheim (DE); Rudigier-Voigt, Eveline, 55128 Mainz (DE); Sweeck, Tamara, 55583 Bad Kreuznach (DE); Anton, Andrea, 55595 Hüffelsheim (DE)
(74) Representative: Herzog IP Patentanwalts GmbH

(56) References cited:
- EP-A1- 1 113 064
- DE-A1-102017 102 900

## Description

The present invention refers to a hollow body, comprising a wall which at least partially surrounds an interior volume of the hollow body; wherein the wall
a) comprises a layer of glass, and
b) has a wall surface;
wherein the wall surface comprises a surface region which is characterised by a contact angle for wetting with water of at least 80°. Further, the invention refers to a process for making such an item; a closed container comprising the hollow body; a process for packaging a pharmaceutical composition within the hollow body; a use of one of the preceding hollow bodies for packaging; and a use of a perfluorinated silane or a perfluorosulfonic acid or both for functionalising a surface of glass of a container.

Containers made from glass have been applied for transporting fluids and powders safely since several centuries. In the last decades, the arts in which glass containers are used for transporting fluids and powders have become increasingly diverse and sophisticated. One such art is the technical field of the present application - pharmaceutical packaging. In the pharmaceutical industry, glass containers such as vials, syringes, ampules and cartridges are applied as primary packaging for all kinds of pharmaceutically relevant compositions, in particular drugs such as vaccines. Specifically in this art, the requirements put on the glass containers have become more and more sophisticated recently.

Glass containers for pharmaceutical packaging are typically cleaned, sterilised, filled and closed, partially lyophilized, on an industrial scale in a line of processing, referred to as filling line in this document. There is a need to increase a production rate of such a filling line in the art. This may be implemented by increasing a velocity of the filling line and / or by reducing shut down times due to disruptions of the processing. In the prior art, such disruptions are typically caused by the occurrence of breakage of glass containers during processing, in particular due to high transportation velocities on the filling line. If such breakage occurs, production has to be stopped, the line has to be cleaned thoroughly from particles and dust and then the system has to be readjusted before it is started again. Contamination of the glass containers with any kind pharmaceutically relevant particles, in particular glass particles, has to be avoided strictly, in particular if parenteralia are packaged.

Further, scratching of the surface or glass surface of the containers has to be avoided as far as possible. Scratches on the container surface may hamper an optical inspection of the filled containers, in particular for the presence of pharmaceutically relevant particles. Further, scratching can lead to glass particles or dust being disassociated from the containers. These particles and dust may contaminate the containers on the filling line.

In the prior art, attempts to solve the above problems by applying a coating to the container surface are known. The requirements on such coatings are rather sophisticated. They have to withstand high temperatures which occur in a sterilisation treatment referred to in the art as depyrogenisation. Further, the coatings have to withstand low temperature treatments such as freeze drying. Even more, the coatings have to withstand washing processes which include increased temperatures and mechanical influences.

It is known, in the prior art, to provide a silicone coating to the glass container exterior surface. Such a coating needs to be cured which may be effected incompletely. Contamination of the container interior may result. Such contamination with silicone is, however, inacceptable for the packaging of certain pharmaceuticals. Further, this coating represents only a temporary means which is used to mitigate the above deleterious effects only in certain processing steps. Afterwards, the silicon coating is removed via treatment with a caustic solution. This removal, however, represents an auxiliary process step which renders to overall packaging process more laborious, complicated and lengthy.

In DE 10 2009 042 159 A1, providing inorganic nano-particles of SiO₂ on the exterior glass container surface is proposed in order to improve tribological characteristics of the container.

Practical experience has, however, shown that the scratch resistance of the container surface is not significantly improved by this measure. Further, the above described incidents on the filling line are not mitigated sufficiently. DE 10 2017 102900 A1 provides another disclosure in the technical field of glass containers for packaging pharmaceutical compositions.

In general, it is an object of the present invention to at least partly overcome a disadvantage arising from the prior art. It is a further object of the invention to provide a glass container for pharmaceutical packaging which allows for an increase of a production rate of a filling line. Further, it is an object of the present invention to provide a glass container for pharmaceutical packaging which allows for an increase of a processing speed of a filling line, or for a reduction of disruptions of a filling line, or both. It is yet another object of the invention to provide a glass container for pharmaceutical packaging which shows a reduced tendency to being damaged or even broken while being processed on a filling line. It is a further object of the invention to provide a glass container for pharmaceutical packaging which shows an improved scratch resistance. According to another object of the invention, one of the above advantageous containers is provided, wherein the container is further suitable for an easy and reliable optical inspection after having been filled. According to yet another object of the invention, one of the above advantageous containers is provided, wherein the container is further suitable for a post-treatment; such as a sterilisation treatment, which may be effected as a high-temperature-treatment - in particular a depyrogenisation - or as a washing process; and a low-temperature-treatment - in particular a freeze drying. According to yet another object of the invention, one of the above advantageous containers is provided, wherein the container does not show an increased tendency to being contaminated in a pharmaceutically relevant manner, preferably the container shows a reduced tendency to being contaminated. The preceding contamination refers, in particular, to the presence of pharmaceutically relevant particles in the container interior.

A contribution to at least partly solving at least one, preferably more than one, of the above objects is made by the independent claims. The dependent claims provide preferred embodiments which contribute to at least partly solving at least one of the objects. The following examples provide further disclosure. The scope of protection, however, remains defined by the claims.

Disclosed is an example 1 of a hollow body 1, comprising a wall which at least partially surrounds an interior volume of the hollow body; wherein the wall
a) comprises a layer of glass, and
b) has a wall surface;
wherein the wall surface comprises a surface region which is characterised by a contact angle for wetting with water of at least 80°, preferably at least 85°, more preferably at least 90°, more preferably at least 95°, more preferably at least 100°, even more preferably at least 105°, most preferably at least 110°. Preferably, the surface region superimposes the layer of glass. Further preferably, the layer of glass extends throughout the wall. Further, preferably the wall is made from the glass to an extend of at least 50 wt.-%, more preferably 60 wt.-%, more preferably 70 wt.-%, more preferably 80 wt.-%, more preferably 90 wt.-%, even more preferably 95 wt.-%, most preferably 99 wt.-%, in each case based on the total weight of the wall.

In an example 2 of the hollow body 1, the hollow body 1 is designed according to its example 1, wherein the wall surface comprises
a. an interior surface which faces the interior volume, and
b. an exterior surface which faces away from the interior volume;
wherein the interior surface, or the exterior surface, or both comprises the surface region. Preferably, the wall surface consists of the interior surface and the exterior surface. Preferably, the exterior surface comprises the surface region at least partially, more preferably the exterior surface comprises the surface region completely. In a preferred example, the interior surface does not comprise any part of the surface region, preferably no part of the interior surface is characterised by a contact angle for wetting with water of at least 80°, more preferably at least 85°, more preferably at least 90°, more preferably at least 95°, more preferably at least 100°, even more preferably at least 105°, most preferably at least 110°.

In an example 3 of the hollow body 1, the hollow body 1 is designed according to its example 1, wherein the wall surface comprises
a. an interior surface which faces the interior volume, and
b. an exterior surface which faces away from the interior volume;
wherein the exterior surface comprises the surface region; wherein the interior surface is characterised across its full area by a contact angle for wetting with water of less than 80°, preferably less than 75°, more preferably less than 70°, more preferably less than 60°, more preferably less than 50°, more preferably less than 40°, more preferably less than 30°, even more preferably less than 20°, most preferably less than 10°.

In an example 4 of the hollow body 1, the hollow body 1 is designed according to any of its examples 1 to 3, wherein the interior volume is in a range from 0.5 to 100 ml, preferably from 1 to 100 ml, more preferably from 1 to 50 ml, even more preferably from 1 to 10 ml, most preferably from 2 to 10 ml.

In an example 5 of the hollow body 1, the hollow body 1 is designed according to any of its preceding examples, wherein the hollow body is a container.

In an example 6 of the hollow body 1, the hollow body 1 is designed according to its example 5, wherein the container is a packaging container for a medical or a pharmaceutical packaging good or both. A preferred pharmaceutical packaging good is a pharmaceutical composition. Preferably, the container is suitable for packaging parenteralia in accordance with section 3.2.1 of the European Pharmacopoeia, 7th edition from 2011.

In an example 7 of the hollow body 1, the hollow body 1 is designed according to its example 5 or 6, wherein the container is one selected from the group consisting of a vial, a syringe, a cartridge, and an ampoule; or a combination of at least two thereof.

In an example 8 of the hollow body 1, the hollow body 1 is designed according to any of its preceding examples, wherein the wall comprises from top to bottom of the hollow body
a] a top region;
b] a body region, which follows the top region via a shoulder; and
c] a bottom region, which follows the body region via a heel.
Preferably, the body region is a lateral region of the hollow body. Particularly preferable, the body region of the wall forms a hollow cylinder. Additionally or alternatively preferable to the preceding, the top region of the wall comprises from top to bottom of the wall a flange and a neck. Further preferably, the body region of the wall comprises the surface region at least partially, more preferably completely. Further preferably, the surface region forms 10 to 100 %, more preferably from 20 to 100 %, more preferably from 30 to 100 %, more preferably from 40 to 100 %, more preferably from 50 to 100 %, more preferably from 60 to 100 %, more preferably from 70 to 100 %, even more preferably from 80 to 100 %, most preferably from 90 to 100 %, of a total area of the exterior surface or the interior surface or both, in each case in the body region of the wall.

In an example 9 of the hollow body 1, the hollow body 1 is designed according to its example 8, wherein throughout the body region a thickness of the layer of glass is in a range from ±0.3 mm, preferably ±0.2 mm, more preferably ±0.1 mm, most preferably ±0.08 mm, in each case based on a mean value of this thickness in the body region of the wall.

In an example 10 of the hollow body 1, the hollow body 1 is designed according to its example 8 or 9, wherein throughout the body region a thickness of the layer of glass is in a range from 0.2 to 5 mm, preferably from 0.4 to 3 mm, more preferably from 0.5 to 2 mm, most preferably from 0.6 to 1.5 mm.

In an example 11 of the hollow body 1, the hollow body 1 is designed according to any of its preceding examples, wherein the glass is of a type selected from the group consisting of a type I glass, an aluminosilicate glass, and fused silica; or of a combination of at least two thereof.

In an example 12 of the hollow body 1, the hollow body 1 is designed according to any of its preceding examples, wherein the surface region is further characterised by a contact angle for wetting with n-hexadecane of at least 30°, preferably at least 35°, more preferably at least 40°, even more preferably at least 45°, most preferably at least 50°.

In an example 13 of the hollow body 1, the hollow body 1 is designed according to any of its preceding examples, wherein the wall further comprises a functionalising composition, wherein the functionalising composition at least partially superimposes the layer of glass, wherein the functionalising composition comprises an organic compound, wherein the organic compound comprises F. Preferably, the surface region is a surface of the functionalising composition.

In an example 14 of the hollow body 1, the hollow body 1 is designed according to its example 13, wherein the organic compound further comprises S or Si or both.

In an example 15 of the hollow body 1, the hollow body 1 is designed according to its example 13 or 14, wherein the organic compound is a silane or an acid or both.

In an example 16 of the hollow body 1, the hollow body 1 is designed according to any of its examples 13 to 15, wherein the functionalising composition comprises the organic compound in a proportion in a range from 50 to 100 wt.-%, preferably from 60 to 100 wt.-%, more preferably from 70 to 100 wt.-%, more preferably from 80 to 100 wt.-%, even more preferably from 90 to 100 wt.-%, in each case based on the weight of the functionalising composition. Most preferably, the functionalising composition consists of the organic compound.

In an example 17 of the hollow body 1, the hollow body 1 is designed according to any of its examples 13 to 16, wherein the functionalising composition at least partially adjoins the layer of glass. Preferably, the functionalising composition adjoins the layer of glass across at least 50 %, more preferably at least 60 %, more preferably at least 70 %, more preferably at least 80 %, even more preferably at least 90 %, most preferably at least 95 %, in each case of a total surface area of the functionalising composition facing away from the layer of glass. Preferably, no coupling agent or primer or both is present between the layer of glass and the functionalising composition.

In an example 18 of the hollow body 1, the hollow body 1 is designed according to any of its examples 13 to 17, wherein a thickness of the functionalising composition is in a range from 0.1 to 500 nm, preferably from 0.1 to 300 nm, more preferably from 0.1 to 100 nm, most preferably from 0.1 to 50 nm. Particularly preferable, the functionalising composition forms a mono-molecular layer.

In an example 19 of the hollow body 1, the hollow body 1 is designed according to any of its examples 13 to 18, wherein the functionalising composition comprises N in a range from 0 to 15 wt.-%, preferably from 0 to 14 wt.-%, more preferably from 0 to 13 wt.-%, more preferably from 0 to 12 wt.-%, more preferably from 1 to 12 wt.-%, more preferably from 2 to 12 wt.-%, more preferably from 3 to 12 wt.-%, more preferably from 4 to 12 wt.-%, even more preferably from 5 to 12 wt.-%, most preferably from 6 to 11 wt.-%, in each case based on the functionalising composition.

In an example 20 of the hollow body 1, the hollow body 1 is designed according to any of its examples 13 to 19, wherein the functionalising composition superimposes the layer of glass at 5 to 50 %, preferably 5 to 40 %, more preferably 10 to 30 %, most preferably 10 to 25 %, in each case of an area of the surface region.

In an example 21 of the hollow body 1, the hollow body 1 is designed according to any of its preceding examples, wherein the functionalising composition forms regions which each have a diameter in a range from 1 to 100 µm, preferably from 1 to 50 µm, more preferably from 3 to 20 µm.

In an example 22 of the hollow body 1, the hollow body 1 is designed according to any of its preceding examples, wherein the wall further comprises a plurality of particles, wherein the plurality of particles superimposes the layer of glass. Preferably, the plurality of particles superimposes the layer of glass on a side of the layer of glass which faces towards the surface region. Further preferably, the plurality of particles superimposes the layer of glass towards the interior surface, or the exterior surface, or both. Further preferably, the plurality of particles superimposes the layer of glass on the same side of the layer of glass as the functionalising composition. Preferably, the plurality of particles superimposes the layer of glass at least partially in the body region, preferably throughout the body region, of the wall.

In an example 23 of the hollow body 1, the hollow body 1 is designed according to its example 22, wherein the plurality of particles is at least partially superimposed by the surface area, preferably on a side of the plurality of particles facing away from the surface of glass. Preferably, the plurality of particles is at least partially superimposed by the functionalising composition, more preferably on a side of the plurality of particles facing away from the surface of glass.

In an example 24 of the hollow body 1, the hollow body 1 is designed according to its example 22 or 23, wherein the particles of the plurality of particles are inorganic particles.

In an example 25 of the hollow body 1, the hollow body 1 is designed according to its example 24, wherein the inorganic particles comprise one selected from the group consisting of a boron nitride, molybdenum sulphide, preferably MoS₂, a silicone nitride, preferably Si₃N₄, and an oxide; or a combination of at least two thereof. A preferred oxide is a silicon oxide or a titanium oxide or both. A preferred silicon oxide is SiO₂. A preferred titanium oxide is TiO₂.

In an example 26 of the hollow body 1, the hollow body 1 is designed according to any of its examples 22 to 25, wherein the plurality of particles superimposes the layer of glass at 1 to 80 %, preferably at 1 to 70 %, more preferably at 1 to 60 %, more preferably at 5 to 60 %, even more preferably at 10 to 60 %, most preferably at 20 to 60 %, in each case of a total surface area of the surface region.

In an example 27 of the hollow body 1, the hollow body 1 is designed according to any of its examples 22 to 26, wherein the plurality of particles is characterised by particle size distribution having a D₅₀ in a range from 10 to 500 nm. In a preferred example, the D₅₀ is less than 300 nm, more preferably less than 150 nm, most preferably less than 100 nm.

In an example 28 of the hollow body 1, the hollow body 1 is designed according to any of its examples 22 to 27, wherein the plurality of particles is characterised by particle size distribution having a full width at half maximum (FWHM) which is less than 30 %, preferably less than 25 %, more preferably less than 20 %, even more preferably less than 15 %, most preferably less than 10 %, in each case of a D₅₀ of the particle size distribution.

In an example 29 of the hollow body 1, the hollow body 1 is designed according to any of its examples 22 to 28, wherein the particles of the plurality of particles are characterised by an aspect ratio in a range from 0.5 to 1.5, preferably from 0.6 to 1.4, more preferably from 0.7 to 1.3, more preferably from 0.8 to 1.2, most preferably from 0.9 to 1.1. Particularly preferable, the particles of the plurality of particles are spherical.

In an example 30 of the hollow body 1, the hollow body 1 is designed according to any of its preceding examples, wherein the hollow body has a transmission coefficient for a transmission of light of a wavelength in a range from 400 nm to 2300 nm, preferably from 400 to 500 nm, more preferably from 430 to 490 nm, through the hollow body via the surface region of more than 0.7, preferably more than 0.75, more preferably more than 0.8 most preferably more than 0.82. Preferably, the transmission coefficient holds for light of each wavelength in the range from 400 nm to 2300 nm, preferably from 400 to 500 nm, more preferably from 430 to 490 nm. Preferably, the hollow body has a first transmission coefficient for a transmission of light of a wavelength in a range from 400 nm to 2300 nm, preferably from 400 to 500 nm, more preferably from 430 to 490 nm, through the hollow body not via the surface region, and a further transmission coefficient for a transmission of light of a wavelength in a range from 400 nm to 2300 nm, preferably from 400 to 500 nm, more preferably from 430 to 490 nm, through the hollow body via the surface region, wherein a ratio of the first transmission coefficient to the further transmission coefficient n is in a range from 0.99 to 1.01, preferably from 0.995 to 1.005.

In an example 31 of the hollow body 1, the hollow body 1 is designed according to any of its preceding examples, wherein the hollow body has a haze for a transmission of light through the hollow body via the surface region in a range from 15 to 22 %, preferably from 15 to 21.7 %, more preferably from 15 to 21.6 %, more preferably from 18 to 21.5 %, more preferably from 18 to 21.4 %, more preferably from 18 to 21.3 %, more preferably from 18 to 21.2%, more preferably from 18 to 21.1 %, more preferably from 18 to 21 %, more preferably from 18 to 20.8 %, more preferably from 18 to 20.6 %, even more preferably from 18 to 20.4 %, most preferably from 18 to 20.2 %. Preferably, the hollow body has a first haze for a transmission of light through the hollow body not via the surface region, and a further haze for a transmission of light through the hollow body via the surface region, wherein the further haze is in a range from 99.7 to 100.3 %, preferably from 99.8 to 100.2 %, more preferably from 99.9 to 100.1 %, most preferably from 100 to less than 100.1 %, in each case of the first haze. In a preferred aspect, the further haze is less than 100 %, preferably less than 99.9 %, more preferably less than 99.8 %, more preferably less than 99.5 %, more preferably less than 99 %, more preferably less than 98.5 %, more preferably less than 98 %, more preferably less than 97 %, more preferably less than 96 %, more preferably less than 95 %, even more preferably less than 94 %, most preferably less than 93 %, in each case of the first haze. Preferably, the above haze values refer to a hollow body having an interior volume of about 2 ml and to a transmission of the light through a part of the hollow body which is of the shape of a hollow cylinder.

In an example 32 of the hollow body 1, the hollow body 1 is designed according to any of its preceding examples, wherein towards the interior volume the interior surface is at least partially superimposed by an alkali metal barrier layer or by a hydrophobic layer or both. The alkali metal barrier layer may consist of any material or any combination of materials which the skilled person deems suitable for providing a barrier action against migration of an alkali metal ion, preferably against any alkali metal ion. The alkali metal barrier layer may be of a multilayer structure.

Preferably, the alkali metal barrier layer comprises SiO₂, preferably a layer of SiO₂. Further, the hydrophobic layer may consist of any material or any combination of materials which provides a layer surface towards the interior volume which has a contact angle for wetting with water of more than 90°. The hydrophobic layer preferably allows for the formation of a well-defined cake upon freeze-drying, in particular in terms of a shape of the cake. A preferred hydrophobic layer comprises a compound of the general formula SiOₓC_{y}H_{z}, preferably a layer of this compound. Therein, x is a number which is less than 1, preferably in a range from 0.6 to 0.9, more preferably from 0.7 to 0.8; y is a number in a range from 1.2 to 3.3, preferably from 1.5 to 2.5; and z is a number as well.

In an example 33 of the hollow body 1, the hollow body 1 is designed according to any of its preceding examples, wherein the interior volume comprises a pharmaceutical composition.

Further disclosed is an example 1 of a process 1 or making an item comprising as process steps
a) providing a hollow body, comprising a wall which at least partially surrounds an interior volume of the hollow body, wherein the wall
   i) comprises a layer of glass, and
   ii) has a wall surface;
b) superimposing at least a part of the layer of glass (104) with a functionalising composition precursor, comprising
   i) an organic compound comprising F, and
   ii) a vehicle;
   and
c) decreasing a proportion of the vehicle in the functionalising composition precursor, thereby obtaining a functionalising composition which at least partially superimposes the layer of glass in a functionalised region.

Therein, the functionalised region is preferably functionalised in that the layer of glass is superimposed by the functionalising composition in that region. Preferably, in the process step c) the proportion of the vehicle in the functionalising composition precursor is decreased by a value in the range from 70 to 99.99 wt.-%, preferably from 75 to 99.99 wt.-%, more preferably from 80 to 99.95 wt.-%, more preferably from 90 to 99.95 wt.-%, most preferably from 95 to 99.95 wt.-%, in each case based on the total weight of the functionalising composition precursor in process step b). Preferably, the decreasing in the process step c) comprises heating the layer of glass at least partially to a temperature in a range from 20 to 250 °C, more preferably from 80 to 200 °C, most preferably from 100 to 175°C. The preceding temperature is preferably kept in the preceding range for a duration in a range from 0.1 to 60 min, more preferably from 1 to 30 min, most preferably from 5 to 15 min.

Preferably, the wall surface comprises
a. an interior surface which faces the interior volume, and
b. an exterior surface which faces away from the interior volume.
Further preferably, in the process step b) the layer of glass is superimposed with the functionalising composition precursor on the interior surface, or the exterior surface, or both. Preferably, the interior surface, or the exterior surface, or both comprises the functionalised region. Preferably, the wall surface consists of the interior surface and the exterior surface. Preferably, in the process step b) the layer of glass is superimposed with the functionalising composition precursor on at least a part of the exterior surface, preferably across the full exterior surface. Preferably, the exterior surface comprises the functionalised region at least partially, more preferably the exterior surface comprises the functionalised region completely. In a preferred example, the interior surface does not comprise any part of the functionalised region. Preferably, in the process step b) the layer of glass is not superimposed with the functionalising composition precursor on any part of the interior surface.

In an example 2 of the process 1, the process 1 is designed according to its example 1, wherein the item is the hollow body 1 according to any of its examples. Here, the hollow body which is provided in the process step a) is a precursor of the hollow body 1 according to any of its examples.

In an example 3 of the process 1, the process 1 is designed according to its example 1 or 2, wherein the organic compound further comprises S or Si or both.

In an example 4 of the process 1, the process 1 is designed according to any of its examples 1 to 3, wherein the organic compound is a silane or an acid or both.

In an example 5 of the process 1, the process 1 is designed according to any of its examples 1 to 4, wherein the functionalising composition precursor comprises the organic compound to a proportion in a range from 0.01 to 30 wt.-%, preferably from 0.01 to 25 wt.-%, more preferably from 0.05 to 20 wt.-%, even more preferably from 0.1 to 5 wt.-%, most preferably from 0.1 to 3 wt.-%, in each case based on the total weight of the functionalising composition precursor in the process step b).

In an example 6 of the process 1, the process 1 is designed according to any of its examples 1 to 5, wherein in the process step b) the layer of glass is contacted with the functionalising composition precursor.

In an example 7 of the process 1, the process 1 is designed according to any of its examples 1 to 6, wherein the functionalising composition precursor further comprises an additive selected from the group consisting of a dispersing agent, a stabiliser, and a chemical bonding agent, or a combination of at least two thereof. A preferred stabiliser has a viscosity in a range from 5 to 100 cst. A preferred chemical bonding agent is an alkoxysilane.

In an example 8 of the process 1, the process 1 is designed according to any of its examples 1 to 7, wherein the vehicle is an organic vehicle or an inorganic vehicle or both. A preferred organic vehicle comprises alkyl groups with less than 7 C-atoms. Additionally or alternatively preferred, the organic vehicle is an alcohol. A preferred alcohol is ethanol or isopropanol or both. A preferred inorganic vehicle is water. Further preferably, the vehicle is a solvent.

In an example 9 of the process 1, the process 1 is designed according to any of its examples 1 to 8, wherein the process step b) or c) or both comprises adjusting, preferably increasing, a contact angle for wetting with water of a surface region of the wall surface to at least 80°, preferably at least 85°, more preferably at least 90°, more preferably at least 95°, more preferably at least 100°, even more preferably at least 105°, most preferably at least 110°.

In an example 10 of the process 1, the process 1 is designed according to any of its examples 1 to 9, wherein the process step b) or c) or both comprises adjusting, preferably increasing, a contact angle for wetting with n-hexadecane of a surface region of the wall surface to at least 30°, preferably at least 35°, more preferably at least 40°, even more preferably at least 45°, most preferably at least 50°.

In an example 11 of the process 1, the process 1 is designed according to any of its examples 1 to 10, wherein prior to the process step b) the process comprises a step of at least partially decreasing a contact angle for wetting with water of the wall surface by a surface-treatment. Preferably, the contact angle for wetting with water is decreased across the full interior surface or exterior surface or both. In another preferred design of the process, the contact angle for wetting with water is decreased across the full wall surface by the surface-treatment. Further, the contact angle for wetting with water of the wall surface is preferably at least partially decreased to less than 30°, more preferably less than 20°, most preferably less than 10°.

In an example 12 of the process 1, the process 1 is designed according to its example 11, wherein the surface-treatment is selected from the group consisting of a plasma treatment, a flame treatment, a corona treatment, and a wet chemical treatment; or a combination of at least two thereof. A preferred plasma treatment comprises contacting the surface of glass with an O-plasma.

In an example 13 of the process 1, the process 1 is designed according to any of its examples 1 to 12, wherein in the process step b) the functionalising composition precursor has a pH in a range from 4 to 8, preferably from 4 to 7, more preferably from 4 to 6, most preferably from 4 to 5.

In an example 14 of the process 1, the process 1 is designed according to any of its examples 1 to 13, wherein the superimposing in the process step b) comprises one selected from the group consisting of a spraying, a dipping, and a printing; or a combination of at least two thereof. A preferred printing is a contact printing or a contact-less printing or both. A preferred contact printing is a tampon printing or a screen printing or both. A preferred contact-less printing is an inkjet printing.

In an example 15 of the process 1, the process 1 is designed according to any of its examples 1 to 14, wherein in the process step b) or c) or in both the wall surface is functionalised in a surface region of the wall surface, wherein in the process step a) the hollow body has a first transmission coefficient for a transmission of light of a wavelength in a range from 400 nm to 2300 nm, preferably from 400 to 500 nm, more preferably from 430 to 490 nm, through the hollow body via the surface region, wherein after the process step c) the hollow body has a further transmission coefficient for a transmission of light of a wavelength in a range from 400 nm to 2300 nm, preferably from 400 to 500 nm, more preferably from 430 to 490 nm, through the hollow body via the surface region, wherein a ratio of the first transmission coefficient to the further transmission coefficient is in a range from 0.99 to 1.01, preferably from 0.995 to 1.005. Preferably, the first and the further coefficients of transmission hold for light of each wavelength in the range from 400 nm to 2300 nm, preferably from 400 to 500 nm, more preferably from 430 to 490 nm. Preferably, the further transmission coefficient is more than 0.7, preferably more than 0.75, more preferably more than 0.8 most preferably more than 0.82.

In an example 16 of the process 1, the process 1 is designed according to any of its examples 1 to 15, wherein in the process step b) or c) or in both the wall surface is functionalised in a surface region of the wall surface, wherein in the process step a) the hollow body has a first haze for a transmission of light through the hollow body not via the surface region, wherein after the process step c) the hollow body has a further haze for a transmission of light through the hollow body via the surface region, wherein the further haze is in a range from 99.7 to 100.3 %, preferably from 99.8 to 100.2 %, more preferably from 99.9 to 100.1 %, most preferably from 100 to less than 100.1 %, in each case of the first haze. In a preferred aspect, the further haze is less than 100 %, preferably less than 99.9 %, more preferably less than 99.8 %, more preferably less than 99.5 %, more preferably less than 99 %, more preferably less than 98.5 %, more preferably less than 98 %, more preferably less than 97 %, more preferably less than 96 %, more preferably less than 95 %, even more preferably less than 94 %, most preferably less than 93 %, in each case of the first haze. Preferably, the further haze is in a range from 15 to 22 %, preferably from 15 to 21.7 %, more preferably from 15 to 21.6 %, more preferably from 18 to 21.5 %, more preferably from 18 to 21.4 %, more preferably from 18 to 21.3 %, more preferably from 18 to 21.2%, more preferably from 18 to 21.1 %, more preferably from 18 to 21 %, more preferably from 18 to 20.8 %, more preferably from 18 to 20.6 %, even more preferably from 18 to 20.4 %, most preferably from 18 to 20.2 %. Preferably, the above haze values refer to a hollow body having an interior volume of about 2 ml and to a transmission of the light through a part of the hollow body which is of the shape of a hollow cylinder.

In an example 17 of the process 1, the process 1 is designed according to any of its examples 1 to 16, wherein the functionalising composition precursor further comprises a plurality of particles.

In an example 18 of the process 1, the process 1 is designed according to its example 17, wherein in the process step b) the functionalising composition precursor comprises the plurality of particles at a proportion in a range from 0.1 to 25 wt.-%, preferably from 0.1 to 20 wt.-%, more preferably from 0.1 to 15 wt.-%, most preferably from 1 to 8 wt.-%, in each case based on the weight of the functionalising composition precursor.

In an example 19 of the process 1, the process 1 is designed according to any of its examples 1 to 16, wherein prior to the process step b) the layer of glass is at least partially superimposed by, preferably contacted with, a plurality of particles at the at least part of the layer of glass.

In an example 20 of the process 1, the process 1 is designed according to any of its examples 17 to 19, wherein the particles of the plurality of particles are inorganic particles.

In an example 21 of the process 1, the process 1 is designed according to its example 20, wherein the inorganic particles comprise, preferably consist of, one selected from the group consisting of a boron nitride, molybdenum sulphide, preferably MoS₂, a silicone nitride, preferably Si₃N₄, and an oxide; or a combination of at least two thereof. A preferred oxide is a silicon oxide or a titanium oxide or both. A preferred silicon oxide is SiO₂. A preferred titanium oxide is TiO₂.

In an example 22 of the process 1, the process 1 is designed according to any of its examples 17 to 21, wherein the plurality of particles is characterised by particle size distribution having a D₅₀ in a range from 10 to 500 nm, preferably from 10 to less than 300 nm, more preferably from 10 to less than 150 nm, most preferably from 10 to less than 100 nm.

In an example 23 of the process 1, the process 1 is designed according to any of its examples 17 to 22, wherein the plurality of particles is characterised by particle size distribution having a full width at half maximum which is less than 30 %, preferably less than 25 %, more preferably less than 20 %, even more preferably less than 15 %, most preferably less than 10 %, in each case of a D₅₀ of the particle size distribution.

In an example 24 of the process 1, the process 1 is designed according to any of its examples 17 to 23, wherein the particles of the plurality of particles are characterised by an aspect ratio in a range from 0.5 to 1.5, preferably from 0.6 to 1.4, more preferably from 0.7 to 1.3, more preferably from 0.8 to 1.2, most preferably from 0.9 to 1.1. Particularly preferable, the particles of the plurality of particles are spherical.

In an example 25 of the process 1, the process 1 is designed according to any of its examples 1 to 24, wherein the process further comprises a process step d) of heating the wall surface at least partially to at least 200 °C, preferably at least 250 °C, more preferably at least 300 °C, most preferably at least 320 °C. The preceding temperature is preferably kept constant for a duration of at least 3 min, preferably at least 5 min, more preferably at least 10 min, even more preferably at least 30 min, most preferably at least 1 h. The preceding duration may be up to several days, preferably 48 h, more preferably 24 h. Preferably, the interior surface or the exterior surface or both, more preferably the full wall surface, is heated in the process step d) as outlined in the preceding. Particularly preferably, the heating in the process step d) is a measure of a depyrogenisation step. In the technical field of pharamcy, depyrogenisation is a step of decreasing an amount of pyrogenic germs on a surface, preferably via a heat-treatment. Therein, the amount of pyrogenic germs on the surface is preferably decreased as much as possible, preferably by at least 80 %, more preferably at least 90 %, more preferably at least 95 %, even more preferably at least 99 %, even more preferably at least 99.5 %, most preferably by 100 %, in each case based on an amount of the pyrogenic germs on the surface prior to the depyrogenisation.

Further disclosed is an example 1 of a hollow body 2 obtainable by the process 1 according to any of its examples 1 to 25. In a preferred example of the hollow body 2, this hollow body 2 shows the technical features of the hollow body 1 according to any of its examples, respectively.

Further disclosed is an example 1 of a closed container comprising a wall; wherein the wall at least partially surrounds an interior volume which comprises a pharmaceutical composition; wherein the wall
a) comprises a layer of glass, and
b) has a wall surface, comprising a surface region which
   i) faces away from the interior volume, and
   ii) is characterised by a contact angle for wetting with water of at least 80°, preferably at least 85°, more preferably at least 90°, more preferably at least 95°, more preferably at least 100°, even more preferably at least 105°, most preferably at least 110°.
In a preferred example of the closed container, it shows the technical features of the hollow body 1 according to any of its examples 1 to 33, respectively.

Further disclosed is an example 1 of a process 2 comprising as process steps
A) providing the hollow body 1 according to any of its examples 1 to 32, or the hollow body 2 according to any of its examples;
B) inserting a pharmaceutical composition into the interior volume; and
C) closing the hollow body.
The closing in the process step C) preferably comprises contacting the hollow body with a closure, preferably a lid, preferably covering an opening of the hollow body with the closure, and joining the closure to the hollow body. The joining preferably comprises creating a form-fit of the hollow body, preferably the flange of the hollow body, with the closure. The form-fit is preferably created via a crimping step. The process 2 is preferably a process for packaging the pharmaceutical composition.

Further disclosed is an example 1 of a closed hollow body obtainable by the process 2.

Further disclosed is an example 1 of a process 3 comprising as process steps
A. providing the hollow body 1 according to its example 33, the closed container according to any of its examples, or the closed hollow body; and
B. administering the pharmaceutical composition to a patient.

Discloses is also an example 1 of a use 1 of the hollow body 1 according to any of its examples 1 to 32, or the hollow body 2 according to any of its examples for packaging a pharmaceutical composition. The packaging preferably comprises inserting the pharmaceutical composition into the interior volume and closing the hollow body.

Further disclosed is an example 1 of a use 2 of a perfluorinated silane or a perfluorosulfonic acid or both for functionalising a surface of glass of a container, preferably of an exterior surface of the container. The functionalising is conducted according to any of the examples of the process 1, wherein the perfluorinated silane or a perfluorosulfonic acid or both is the organic composition. A preferred container is a pharmaceutical packaging container, more preferably one selected from the group consisting of a vial, a syringe, a cartridge, and an ampoule; or a combination of at least two thereof.

Features described as preferred in one category, for example according to the hollow body 1, are analogously preferred in an example of the other categories, such as an example of the process 1 or the closed container.

### Hollow body

The hollow body according to the invention may have any size or shape which the skilled person deems appropriate in the context of the invention. Preferably, the head region of the hollow body comprises an opening, which allows for inserting a pharmaceutical composition into the interior volume of the hollow body. In that case, the wall surrounds the interior volume of the hollow body only partially. The hollow body is preferably a glass body or a glass container in that sense that the layer of glass extends over the full area of the wall surface. In that case, the layer of glass preferably determines a macroscopic shape of the wall. Preferably, the layer of glass is of a one-piece design. The layer of glass of such a glass body or a glass container may preferably be made by blow moulding a glass melt; or by preparing a tube of a glass, preferably in form of a hollow cylinder, forming the bottom of the hollow body from one end of the tube, thereby closing the tube at this end, and forming the head region of the hollow body from the opposite end of the tube. According to the nomenclature used herein, the wall of the hollow body comprises the layer of glass and every layer and every functionalisation superimposed thereon. The wall surface is formed by the surface of the layer or functionalisation which is positioned at an outermost or innermost position of the wall.

For the use in this document, the interior volume represents the full volume of the interior of the hollow body. This volume may be determined by filling the interior of the hollow body with water up to the brim and measuring the volume of the amount of water which the interior can take up to the brim. Hence, the interior volume as used herein is not a nominal volume as it is often referred to in the technical field of pharmacy. This nominal volume may for example be less than the interior volume by a factor of about 0.5.

### Glass

The glass of the layer of glass may be any type of glass and may consist of any material or combination of materials which the skilled person deems suitable in the context of the invention. Preferably, the glass is suitable for pharmaceutical packaging. Particularly preferable, the glass is of type I in accordance with the definitions of glass types in section 3.2.1 of the European Pharmacopoeia, 7th edition from 2011. Additionally or alternatively preferable to the preceding, the glass is selected from the group consisting of a borosilicate glass, an aluminosilicate glass, and fused silica; or a combination of at least two thereof. For the use in this document, an aluminosilicate glass is a glass which has a content of Al₂O₃ of more than 8 wt.-%, preferably more than 9 wt.-%, particularly preferable in a range from 9 to 20 wt.-%, in each case based on the total weight of the glass. A preferred aluminosilicate glass has a content of B₂O₃ of less than 8 wt.-%, preferably at maximum 7 wt.-%, particularly preferably in a range from 0 to 7 wt.-%, in each case based on the total weight of the glass. For the use in this document, a borosilicate glass is a glass which has a content of B₂O₃ of at least 1 wt.-%, preferably at least 2 wt.-%, more preferably at least 3 wt.-%, more preferably at least 4 wt.-%, even more preferably at least 5 wt.-%, particularly preferable in a range from 5 to 15 wt.-%, in each case based on the total weight of the glass. A preferred borosilicate glass has a content of Al₂O₃ of less than 7.5 wt.-%, preferably less than 6.5 wt.-%, particularly preferably in a range from 0 to 5.5 wt.-%, in each case based on the total weight of the glass. In a further aspect, the borosilicate glass has a content of Al₂O₃ in a range from 3 to 7.5 wt.-%, preferably in a range from 4 to 6 wt.-%, in each case based on the total weight of the glass.

A glass which is further preferred according to the invention is essentially free from B. Therein, the wording "essentially free from B" refers to glasses which are free from B which has been added to the glass composition by purpose. This means that B may still be present as an impurity, but preferably at a proportion of not more than 0.1 wt.-%, more preferably not more than 0.05 wt.-%, in each case based on the weight of the glass.

### Silane

In the context of the invention, every silane which the skilled person deems suitable comes into consideration. A preferred silane is a perfluorinated silane. A preferred perfluorinated silane is a fluoroalkylsilane. A preferred fluoroalkylsilane is a perfluorooctanesulfonylpropyltriethyloxysilane, a 1H,1H,2H,2H-Perfluorododecyltrimethoxysilane, a 1H,1H,2H,2H-Perfluorooctyltriethoxysilane; or a combination of at least two thereof. Further preferred perfluorinated silanes are commercially available under the tradenames Dynasylan® F8261, Dynasylan® F8263, Dynasylan® F8815, Dynasylan® SIVO 121, Dynasylan® SIVO Clear, Dynasylan® SIVO Clear EC, and EKG6051 activator.

### Acid

In the context of the invention, every acid which the skilled person deems suitable comes into consideration. A preferred acid is a Lewis acid or a Brønsted-Lowry acid or both, wherein both is preferred. A further preferred acid is an acid comprising S. A preferred acid which comprises S is a sulfonic acid. A preferred sulfonic acid is perfluorooctanesulfonic acid (PFOS).

### Functionalising composition precursor

The functionalising composition precursor is a precursor of the functionalising composition according to the invention. Preferably, the functionalising composition is obtainable from the functionalising composition precursor by decreasing a proportion of the vehicle in the precursor, preferably by drying the precursor. Preferably, the proportion of the vehicle is decreased to about 0 wt.-%, based on the weight of the remaining composition. The vehicle is preferably fluid at temperatures above 0 °C.

### Pharmaceutical composition

In the context of the invention, every pharmaceutical composition which the skilled person deems suitable comes into consideration. A pharmaceutical composition is a composition comprising at least one active ingredient. A preferred active ingredient is a vaccine. The pharmaceutical composition may be fluid or solid or both, wherein a fluid composition is particularly preferred herein. A preferred solid composition is granular such as a powder, a multitude of tablets or a multitude of capsules. A further preferred pharmaceutical composition is a parenterialium, i.e. a composition which is intended to be administered via the parenteral route, which may be any route which is not enteral. Parenteral administration can be performed by injection, e.g. using a needle (usually a hypodermic needle) and a syringe, or by the insertion of an indwelling catheter.

### D₅₀

The Dso-value of a particle size distribution provides the particle diameter for which 50 % of all particles of the plurality of particles having this particle size distribution have smaller diameters than this value. Herein, the diameter is the length of the longest straight line which starts and ends on the surface of the particle and which extends through the geometric centre of the particle.

### Wall

Herein, the wall of the hollow body comprises a layer of glass. The wall may comprise further layers on one or both sides of the layer of glass. The layer of glass, preferably extends laterally throughout the wall. This means that, preferably, each point on the wall surface lies on top of a point of the layer of glass. The hollow body is preferably a hollow body of glass. In any case, the layers of the wall are joined to one another. Two layers are joined to one another when their adhesion to one another goes beyond van der Waals attraction forces. Unless otherwise indicated, the layers in a layer sequence may follow one another indirectly, in other words with one or at least two intermediate layers, or directly, in other words without an intermediate layer. This is particularly the case with the formulation wherein one layer superimposes another layer. Further, if an entity (e.g. composition precursor, particles) is superimposed onto a layer or a surface, this entity may be contacted with that layer or surface or it may not be contacted with that layer or surface, but be indirectly overlaid onto that layer or surface with another entity (e.g. a layer) in-between.

### MEASUREMENT METHODS

The following measurement methods are to be used in the context of the invention. Unless otherwise specified, the measurements have to be carried out at an ambient temperature of 23°C, an ambient air pressure of 100 kPa (0.986 atm) and a relative atmospheric humidity of 50 %.

### Contact angle for wetting with water and n-hexadecane

The contact angle is determined in accordance with the standard DIN 55660, parts 1 and 2. The contact angle is determined using the static method. Deviating from the standard, the measurement is conducted at curved surfaces as the wall of the hollow body is usually curved. Further, the measurements are conducted at 22 to 25 °C ambient temperature and 20 to 35 % relative atmospheric humidity. A Drop Shape Analyzer - DSA30S from Krüss GmbH is applied for the measurements. Uncertainty of the measurement increases for contact angles below 10°.

### Wall thickness and tolerance of wall thickness

The wall thickness and deviations from the mean value of the wall thickness (tolerance) are determined in accordance with the following standards for the respective type of hollow body:
DIN ISO 8362-1 for vials,
DIN ISO 9187-1 for ampoules,
DIN ISO 110 4 0- 4 for syringes,
DIN ISO 13926-1 for cylindrical cartridges, and
DIN ISO 11040-1 for dental cartridges.

### Transmission coefficient

Herein, the transmission coefficients are defined as T = Iₜᵣₐₙₛ / I₀, wherein I₀ is the intensity of the light which is incident at a right angle on an incidence region of the surface region and Iₜᵣₐₙₛ is the intensity of the light which leaves the hollow body on a side of the hollow body which is opposite to the incidence region. Hence, T refers to light which transmits the hollow body completely, i.e. one time through the wall into the interior volume and from there a second time through the wall out of the interior volume. Hence, the light transmits through two curved sections of the wall of the hollow body. The transmission coefficient is determined in accordance with the standard ISO 15368:2001(E), wherein an area of measurement of the dimensions 3 mm × 4 mm is used. Further, the light is incident on the hollow body at a right angle to the vertical extension of the exterior surface of the hollow body. Preferably, the transmission coefficients herein refer to a hollow body of the type 2R according to DIN/ISO 8362 and to a transmission of the light through a part of the hollow body which is of the shape of a hollow cylinder.

### Cover ratio

Here, a topographical measurement of the surface to be studied is conducted with a white-light-spectrometer of the type Coherence Scanning Interferometry/Phase Shift Interferometry (CSI/PSI) from Zygo Corporation. The cover ratio is calculated from the obtained topographical image. The sum of the elevated areas is divided by the total area of measurement.

### Particle size distribution

The particle size distribution is determined by dynamic light scattering (DLS). A Delsa™ Nano HC from Beckman Coulter is applied for the measurement. A sample of about 1 ml of the particles to be studied is taken. The sample is inserted into a plastic cuvette. If the sample is a dispersion which is very opaque, it is diluted until the laser intensity is above 10 %. The sample is measured in accordance with the standard method of the measurement device. Therein, the algorithm calculates the diameter from 850 measurements. The standard software of the measuring device creates a diagram which shows the relative intensity of the measurements versus the particle diameter. The respective arithmetic mean and the standard deviation are provided by the software as well.

### Haze

The haze is a measure for the opacity of a transparent sample, such as a glass sample. The value of the haze represents the fraction of light which has been transmitted through the sample, here the empty container, and which is scattered out of a certain spatial angle around the optical axis. Thus, the haze quantifies material defects in the sample which negatively affect transparency. Herein, the haze is determined according to the standard ASTM D 1033. In accordance with this standard, 4 spectra are measured and for each of them the transmission coefficient is calculated. The haze value in % is calculated from these coefficients of transmission. A Thermo Scientific Evolution 600 spectrometer with integrating sphere and the software OptLab-SPX are applied for the measurements. In order to allow for measuring the diffusive transmission, the sample is positioned in front of the entrance of the integrating sphere. The reflection opening is left empty such that only the transmitted and scattered fraction of the incident light is detected. The fraction of the transmitted light which is not sufficiently scattered is not detected. Further measurements pertain to detection of the scattered light in the sphere (without sample) and to the overall transmission of the sample (reflection opening closed). All the measurement results are normalised to the overall transmission of the sphere without sample which is implemented as obligatory baseline correction in the software. Herein, the haze refers to light which transmits the hollow body completely, i.e. one time through the wall into the interior volume and from there a second time through the wall out of the interior volume. Hence, the light transmits through two curved sections of the wall of the hollow body. Further, the light is incident on the hollow body at a right angle to the vertical extension of the exterior surface of the hollow body. The hollow body, preferably, is a vial of the type 2R according to DIN/ISO 8362 and the transmission is conducted through a part of the hollow body which is of the shape of a hollow cylinder.

### Scratch test

An MCT MikroCombiTester from CSM MCT S/N 01-04488 is applied for the scratch test. The probe tip which is used as indenter is held by a special mount. For the test, the probe tip is moved forwards at an angle of 90° with respect to the surface to be tested underneath this surface, thereby scratching over the surface at a well-defined force. This test force is progressively increased from 0 to 30 N. The indenter is moved forwards at a velocity of 10 mm/min over a length of 15 mm, wherein the test force is progressively increased from 0 to 30 N (load rate 19.99 N/min). Afterwards, the scratched surface is checked with a microscope at a magnification of 5 times.

The invention is set out in more detail below by means of examples and drawings, with the examples and drawings not denoting any restriction on the invention. Furthermore, unless otherwise indicated, the drawings are not to scale.

### Example 1 (according to the invention)

### Preparation of functionalising solution:

500 ml of isopropanol are provided in a beaker. 5 ml of 1H,1H,2H,2H-perfluorooctyltriethoxysilane from Sigma Aldrich are added to the beaker and the obtained composition is stirred for 2 h with a magnetic stirrer at ambient temperature of 20 °C. The thus obtained solution is ready for use within the following 10 days. The solution should not be used after these 10 days have lapsed.

### Functionalisation with solution:

A commercially available glass vial of the type "Vial 2.00 ml Fiolax clear" from Schott AG which of the type 2R according to DIN/ISO 8362 is provided. The surface of this vial does not have any coating or functionalisation. This vial is washed as described below. The washed vial is immersed with its bottom first into the functionalising solution, which has been prepared as set out above, at a velocity of 20 cm/min. Therein, the head region of the vial, including the vial opening, is not immersed into the solution in order to prevent contacting the interior surface of the vial with the solution. The vial is kept in the composition for 2 s. Afterwards, the vial is retracted from the solution at a velocity of 20 cm/min. Subsequently, the vial is kept as it is for 10 s at ambient temperature of 20 °C. Then the vial is placed with its bottom onto an absorbent substrate such as a paper towel. Then the vial is dried for 10 min at 150 °C in an oven.

### Example 2 (according to the invention)

### Preparation of functionalising solution:

1,000 ml of the basic solution "EKx Grundlosung" from ETC Products GmbH, Germany, are provided in a beaker. 7 ml of the activator EKG6015 from ETC Products GmbH, Germany, are added and the obtained composition is stirred for 2 h with a magnetic stirrer at ambient temperature of 20 °C. The thus obtained solution is ready for use within the following 10 days. The solution should not be used after these 10 days have lapsed.

### Functionalisation with solution:

A commercially available glass vial of the type "Vial 2.00 ml Fiolax clear" from Schott AG which of the type 2R according to DIN/ISO 8362 is provided. The surface of this vial does not have any coating or functionalisation. This vial is washed as described below. The washed vial is immersed with its bottom first into the functionalising solution, which has been prepared as set out above, at a velocity of 30 cm/min. Therein, the head region of the vial, including the vial opening, is not immersed into the solution in order to prevent contacting the interior surface of the vial with the solution. The vial is kept in the composition for 2 s. Afterwards, the vial is retracted from the solution at a velocity of 10 cm/min. Subsequently, the vial is kept as it is for 10 s at ambient temperature of 20 °C. Then the vial is placed with its bottom onto an absorbent substrate, such as a paper towel. Then the vial is dried for 10 min at 150 °C in an oven.

### Example 3 (according to the invention)

### Preparation of functionalising solution:

500 ml of isopropanol are provided in a beaker. 5 ml of 1H,1H,2H,2H-perfluorododecyltrimethoxysilane from Sigma Aldrich are added to the beaker and the obtained composition is stirred for 2 h with a magnetic stirrer at ambient temperature of 20 °C.

The thus obtained solution is ready for use within the following 10 days. The solution should not be used after these 10 days have lapsed.

### Functionalisation with solution:

A commercially available glass vial of the type "Vial 2.00 ml Fiolax clear" from Schott AG which of the type 2R according to DIN/ISO 8362 is provided. The surface of this vial does not have any coating or functionalisation. This vial is washed as described below. The washed vial is immersed with its bottom first into the functionalising solution, which has been prepared as set out above, at a velocity of 50 cm/min. Therein, the head region of the vial, including the vial opening, is not immersed into the solution in order to prevent contacting the interior surface of the vial with the solution. The vial is kept in the composition for 1 s. Afterwards, the vial is retracted from the solution at a velocity of 5 cm/min. Subsequently, the vial is kept as it is for 10 s at ambient temperature of 20 °C. Then the vial is placed with its bottom onto an absorbent substrate, such as a paper towel. Then the vial is dried for 30 min at the ambient temperature of 20 °C in an oven.

### Example 4 (according to the invention)

### Preparation of functionalising solution:

500 ml of Gladen from Solvay are provided in a beaker. 10 ml of perfluorooctanesulfonylpropyltriethyloxysilane (concentration of 30 %) from Wuhan Defu Economic Development Co. are added to the beaker and the obtained composition is stirred for 2 h with a magnetic stirrer at ambient temperature of 20 °C. The thus obtained solution is ready for use within the following 10 days. The solution should not be used after these 10 days have lapsed.

### Functionalisation with solution:

A commercially available glass vial of the type "Vial 2.00 ml Fiolax clear" from Schott AG which of the type 2R according to DIN/ISO 8362is provided. The surface of this vial does not have any coating or functionalisation. This vial is washed as described below. The washed vial is immersed with its bottom first into the functionalising solution, which has been prepared as set out above, at a velocity of 30 cm/min. Therein, the head region of the vial, including the vial opening, is not immersed into the solution in order to prevent contacting the interior surface of the vial with the solution. The vial is kept in the composition for 1 s. Afterwards, the vial is retracted from the solution at a velocity of 20 cm/min. Subsequently, the vial is kept as it is for 10 s at ambient temperature of 20 °C. Then the vial is placed with its bottom onto an absorbent substrate, such as a paper towel. Then the vial is dried for 10 min at 150 °C in an oven.

### Example 5 (according to the invention)

### Preparation of first functionalising solution:

99.8 ml of water are provided in a beaker and 0.2 ml of Levasil CS50-34P (having 50 % of SiO₂ particles) are added. The thus obtained composition is stirred for 30 s with a magnetic stirrer at ambient temperature of 20 °C. Subsequently, 0.5 ml of Tween20 are added and the composition is stirred for further 10 min. The thus obtained solution is ready for use.

### Functionalisation with first functionalising solution:

A commercially available glass vial of the type "Vial 2.00 ml Fiolax clear" from Schott AG which of the type 2R according to DIN/ISO 8362 is provided. The surface of this vial does not have any coating or functionalisation. This vial is washed as described below. The washed vial is immersed with its bottom first into the first functionalising solution, which has been prepared as set out above, at a velocity of 30 cm/min. Therein, the head region of the vial, including the vial opening, is not immersed into the solution in order to prevent contacting the interior surface of the vial with the solution. The vial is kept in the composition for 2 s. Afterwards, the vial is retracted from the solution at a velocity of 20 cm/min. Subsequently, the vial is kept as it is for 10 s at ambient temperature of 20 °C. Then the vial is placed with its bottom onto an absorbent substrate, such as a paper towel. Then a heat-treatment is conducted for 30 min at 600 °C in an oven. Afterwards, the vial is taken out of the oven and cooled down to the ambient temperature. The vial is ready for functionalising with the second solution.

### Preparation of second functionalising solution:

500 ml of isopropanol are provided in a beaker and 5 ml of 1H,1H,2H,2H-perfluorooctyltriethoxysilane from Sigma Aldrich are added. The thus obtained composition is stirred for 2 h with a magnetic stirrer at ambient temperature of 20 °C, thereby obtaining a solution which is ready for use within the following 10 days. The solution should not be used after these 10 days have lapsed.

### Functionalisation with second functionalising solution:

The vial which has been functionalised with the first solution as described above is immersed with its bottom first into the second functionalising solution at a velocity of 20 cm/min. Therein, the head region of the vial, including the vial opening, is not immersed into the solution in order to prevent contacting the interior surface of the vial with the solution. The vial is kept in the composition for 1 s. Afterwards, the vial is retracted from the solution at a velocity of 20 cm/min. Subsequently, the vial is kept as it is for 10 s at ambient temperature of 20 °C. Then the vial is placed with its bottom onto an absorbent substrate, such as a paper towel. Then the vial is dried for 10 min at 150 °C in an oven.

### Example 6 (according to the invention)

### Preparation of first functionalising solution:

The first functionalising solution is prepared as described for the example 5 above.

### Functionalisation with first functionalising solution:

A commercially available glass vial of the type "Vial 2.00 ml Fiolax clear" from Schott AG which of the type 2R according to DIN/ISO 8362 is provided. The surface of this vial does not have any coating or functionalisation. This vial is washed as described below. The washed vial is functionalised with the first functionalising solution as described above for the example 5. The heat-treatment is, however, conducted for 30 min at 350 °C in order to obtain a vial which is ready for functionalising with the second solution.

### Preparation of second functionalising solution:

1,000 ml of the basic solution "EKx Grundlosung" from ETC Products GmbH, Germany, are provided in a beaker. 7 ml of the activator EKG6015 from ETC Products GmbH, Germany, are added and the obtained composition is stirred for 2 h with a magnetic stirrer at ambient temperature of 20 °C. The thus obtained solution is ready for use within the following 10 days. The solution should not be used after these 10 days have lapsed.

### Functionalisation with second functionalising solution:

The vial which has been functionalised with the first solution as described above is functionalised with the second functionalising solution as described above for the example 5. Here, however, the vial is immersed into the second functionalising solution at a velocity of 10 cm/min.

### Example 7 (according to the invention)

### Preparation of first functionalising solution:

The first functionalising solution is prepared as described for the example 5 above, wherein 90 ml of water and 10 ml of Levasil CS50-34P are used.

### Functionalisation with first functionalising solution:

A commercially available glass vial of the type "Vial 2.00 ml Fiolax clear" from Schott AG is provided. The surface of this vial does not have any coating or functionalisation. This vial is washed as described below. The washed vial is functionalised with the first functionalising solution by the steps described above for the example 5.

### Preparation of second functionalising solution:

The second functionalising solution is prepared as described above for the example 5.

### Functionalisation with second functionalising solution:

The vial which has been functionalised with the first solution as described above is functionalised with the second functionalising solution as described above for the example 5.

### Comparative Example 1 (not according to the invention)

A commercially available glass vial of the type "Vial 2.00 ml Fiolax clear" from Schott AG which of the type 2R according to DIN/ISO 8362 is provided. The surface of this vial does not have any coating or functionalisation.

### Comparative Example 2 (not according to the invention)

A commercially available glass vial of the type "Vial 2.00 ml Fiolax clear" from Schott AG which of the type 2R according to DIN/ISO 8362 is coated on its exterior surface with MED10-6670 from NuSiL.

### Comparative Example 3 (not according to the invention)

A glass vial of the type 2R according to DIN/ISO 8362 is coated on its exterior surface with polyimide.

### Evaluation

For each of the examples 1 to 7 and the comparative examples 1 to 3, the contact angles for water and n-hexadecane are determined on the exterior surface of the vial body in accordance with the above measurement methods. Further, 10,000 of the vials of each example and comparative example, respectively, are processed on a standard pharmaceutical filling line and thus, filled with an influenza vaccine. Table 1 below shows the results of the contact angle measurements and an evaluation of the vials regarding their tendency to being damaged or even break on the filling line. Here, ++ means that no or only very few vials are being damaged or broken, + means that few vials are being damaged or broken, - means that damages to vials and broken vials occur more often than for +, -- means that damages to vials and broken vials occur more often than for -.

**Table 1: Contact angles prior to any post treatment and tendency to being damages on the filling line**

| **Example** | **Contact angle water [°]** | **Contact angle n-hexadecane [°]** | **Low tendency to damages in filling line** |
|---|---|---|---|
| Example 1 | 109 | 72 | + |
| Example 2 | 112 | 72 | ++ |
| Example 3 | 115 | 72 | ++ |
| Example 4 | 118 | 72 | ++ |
| Example 5 | 113 | 69 | ++ |
| Example 6 | 115 | 69 | ++ |
| Example 7 | 111 | 69 | ++ |
| Comparative example 1 | < 10 | < 10 | -- |
| Comparative example 2 | 70 | < 10 | - |
| Comparative example 3 | 72 | < 10 | - |

Further, the vials of the examples and comparative examples are studied for their optical characteristics which may influence an optical inspection of the vials, in particular for pharmaceutically relevant particles, after being filled with a vaccine and being closed. These studies are conducted prior to filling the vials. Here, the increase of the haze by the functionalisation / coating and the transmission coefficient (T) of the vials for blue light of wavelength 450 nm are determined in accordance with the above measurement methods. The results are provided in the table 2 below. Column 3 shows the increase of the haze by the functionalisation / coating with respect to the untreated vial which corresponds to comparative example 1.

**Table 2: Optical characteristics of the vials of the examples 1 to 7 and the comparative examples 1 to 3**

| **Example** | **Vial Diameter [mm]** | **Increase of haze [%]** | **T at 450 nm** |
|---|---|---|---|
| Example 1 | 15.92 | < 0.3 | 0.85 |
| Example 2 | 15.92 | < 0.3 | 0.85 |
| Example 3 | 15.92 | < 0.3 | 0.85 |
| Example 4 | 15.92 | < 0.3 | 0.85 |
| Example 5 | 15.93 | < 0.3 | 0.86 |
| Example 6 | 15.93 | < 0.3 | 0.86 |
| Example 7 | 15.93 | < 0.3 | 0.86 |
| Comparative example 1 | 16.01 | / | 0.85 |
| Comparative example 2 | 15.93 | 6 | 0.86 |
| Comparative example 3 | 16.66 | 3 | 0.74 |

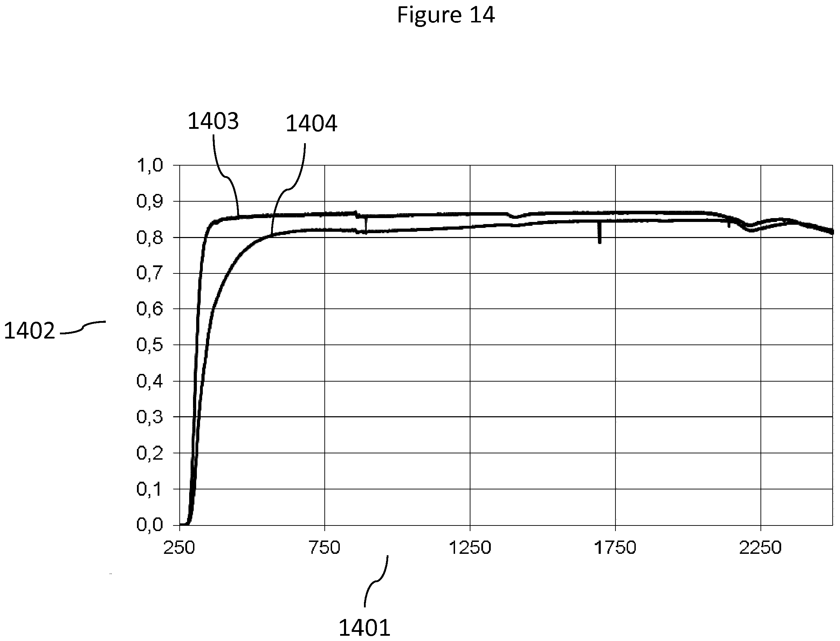

In addition to table 2, figure 14 shows the T for the empty vials of the examples 1 to 7 and the comparative examples 1 to 3 across a broad spectral range. From this figure, it can clearly be seen that the functionalisations according to the examples 1 to 7 do not significantly deteriorate T in the studied spectral range. The vial according to the comparative examples 3 shows a smaller T over a broad range of wavelengths, including the visible part of the electromagnetic spectrum.

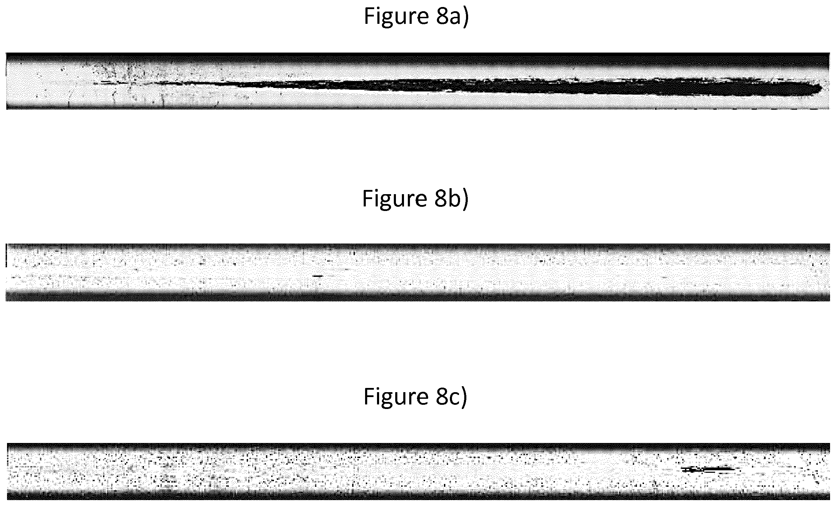

For further studies, functionalised surfaces of vials according to the examples 1 and 5 and the comparative example 1 have been subjected to a scratch test which is described in detail in the above measurement methods sections. Typical results of these tests are shown in the figures 8a) to c). Therein, figure 8a) shows an unfunctionalised surface of a vial according to comparative example 1 after having been subjected to the scratch test. Figure 8b) shows a functionalised vial surface according to example 1 and figure 8c) shows a functionalised vial surface according to example 5, in each case after having been subjected to the scratch test. In these figures, the force with which the indenter is pushed against the vial surface is increased linearly from 0.1 N (at the left margins of the figures) up to 30 N (at the right margins of the figures). As the figure 8a) to c) show typical results of the scratch test studies, it can be concluded that the scratch resistance of the vial surfaces which have been functionalised according to the invention has been greatly improved with respect to the unfunctionalised reference vial.

### Post-treatment

For further studies, the vials of the examples 1 to 7 are subjected to two different kinds of post-treatment, i.e. a washing procedure or a depyrogenisation procedure. These post-treatments are described below. The washing procedure is the same as used prior to functionalising the vials in the examples 1 to 7.

### Washing:

A HAMO LS 2000 washing machine is applied for the washing procedure. The HAMO LS 2000 is connected to the purified water supply. Further, the following devices are used.
cage 1: 144 with 4 mm nozzles
cage 2: 252 with 4 mm nozzles
drying cabinet from Heraeus (adjustable up to 300 °C)

The tap is opened. Then the machine is started via the main switch. After conducting an internal check, the washing machine shows to be ready on the display. Program 47 is a standard cleaning-program which operates with the following parameters:
pre-washing without heating for 2 min
washing at 40 °C for 6 min
pre-rinsing without heating for 5 min
rinsing without heating for 10 min
end-rinsing at without heating for 10 min
drying without heating for 5 min

The holder for the vials in the cages 1 and 2 have to be adjusted considering the size of the vials in order to obtain a distance of the nozzle of about 1.5 cm. The vials to be washed are placed on the nozzles with the head first. Subsequently, the stainless steel mesh is fixed on the cage. The cage is oriented to the left and pushed into the machine. Then the machine is closed. Program 47 (GLAS040102) is selected and then the HAMO is started via START. After the program has finished (1 h), the cages are taken out and the vials are placed with their opening facing downwards in drying cages. A convection drying cabinet with ambient air filter is applied for the drying. The drying cabinet is adjusted to 300 °C. The vials are placed into the drying cabinet for 20 min. After the vials have cooled down, they are sorted into appropriate boxes.

### Depyrogenisation:

The vials are depyrogenised by placing them in an oven which is heated to 350 °C. This temperature is kept constant for 1 h. Subsequently, the vials are taken out of the oven and left to cool down.

### Evaluation after post-treatment

Vials of the examples 1 and 5 have been subjected either to the above washing procedure or to the depyrogenisation procedure. Afterwards, the contact angle for wetting with water of the exterior surfaces of the vials in their tubular body regions have been measured. The results are shown in figures 9 and 10. Figure 10 compares, from left to right, the contact angles of vials of comparative example 1, of example 1 without post-treatment, of example 1 after washing, and of example 1 after depyrogenisation. Figure 11 compares, from left to right, the contact angles of vials of comparative example 1, of example 5 without post-treatment, of example 5 after washing, and of example 5 after depyrogenisation. It is demonstrated that the functionalisations of examples 1 and 5 withstand the washing procedure as well as the depyrogenisation procedure.

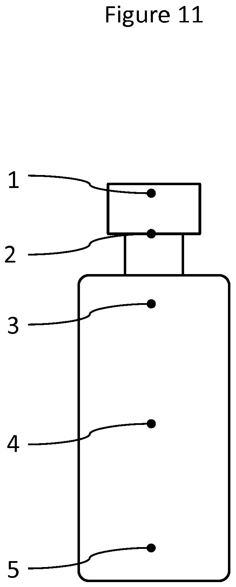

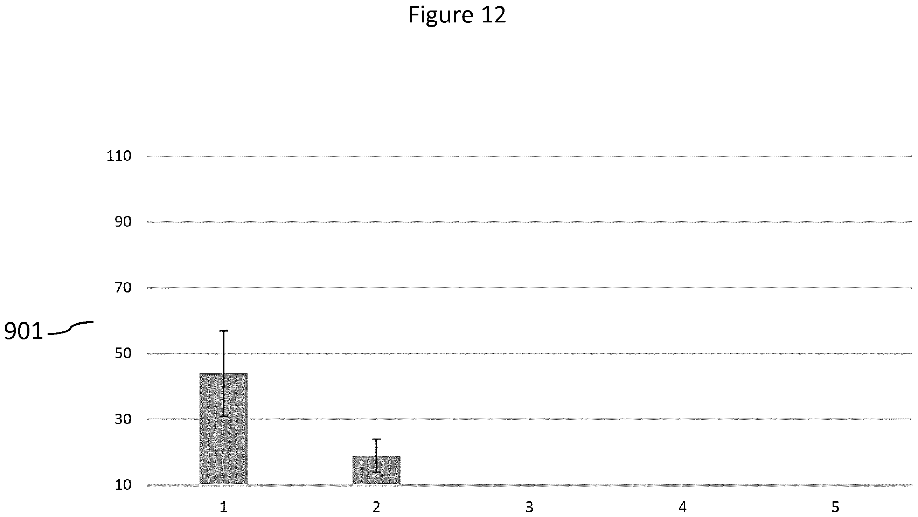

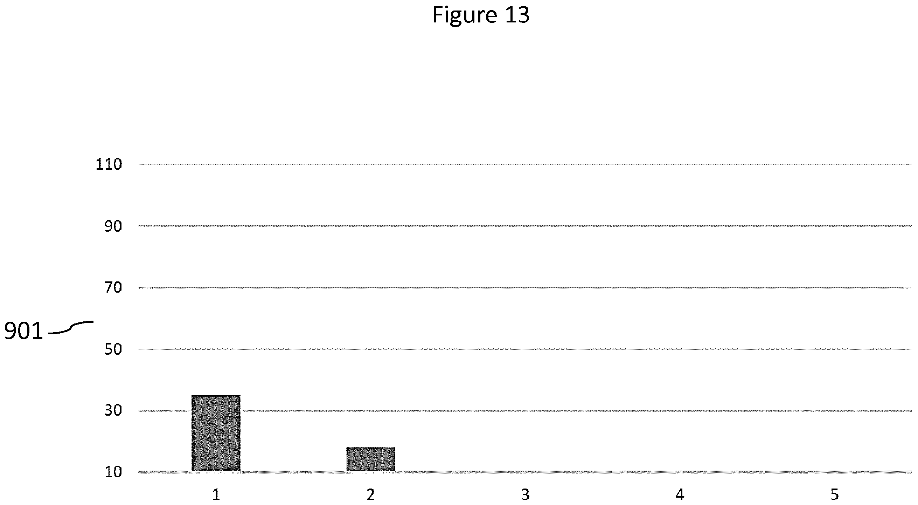

For further studies, vials according to examples 1 and 5 have been washed as described above. Then the washed vials have been broken such that the interior surfaces became accessible for measurements of the contact angle for wetting with water. Those measurements have been conducted at 5 different positions (1 to 5) on the interior surface which are depicted schematically in figure 11. The measurement results for vials of example 1 are shown in figure 12 and for vials of example 5 in figure 13.

Even further tests have been conducted, in that vials according to the examples 1 to 7 have been freeze dried. Prior to and after this procedure the functionalised surfaces have been checked for damages and defects under the microscope at a magnification of 5 to 20 times. It has been observed that no defects or damages have been caused by the freeze drying procedure.

Unless otherwise specified in the description or the particular figure:

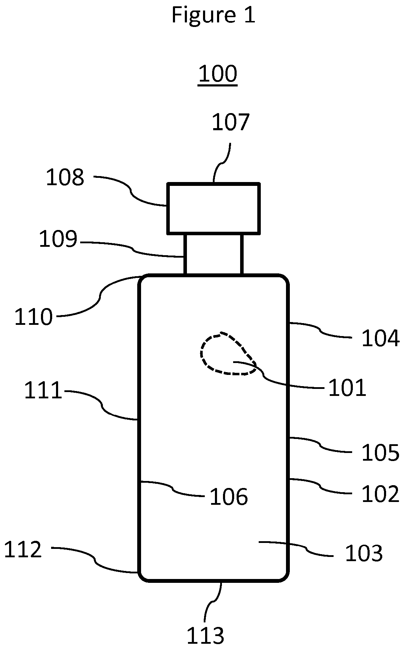

- Figure 1: shows a schematic depiction of a hollow body according to the invention;

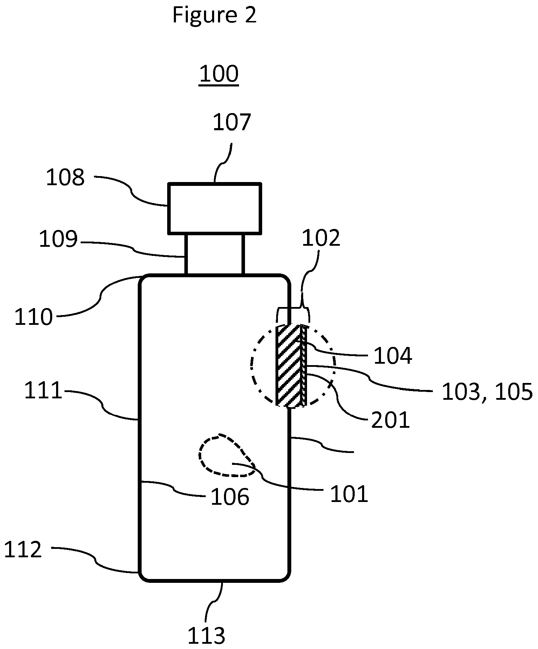

- Figure 2: shows a schematic depiction of a further hollow body according to the invention;

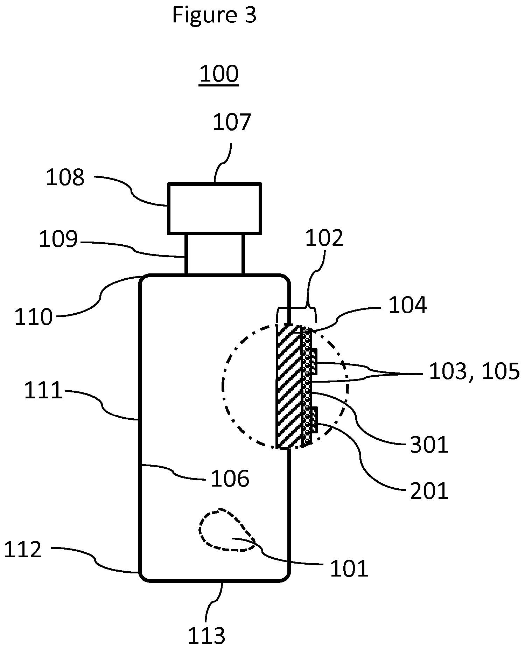

- Figure 3: shows a schematic depiction of a further hollow body according to the invention;

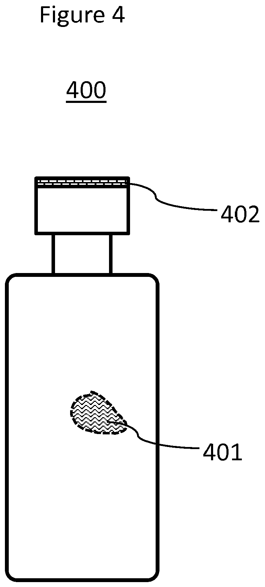

- Figure 4: shows a schematic depiction of a further hollow body according to the invention;

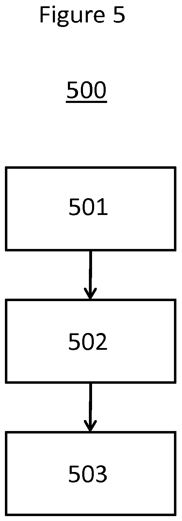

- Figure 5: shows a flow chart of a process according to the invention for the preparation of a hollow body;

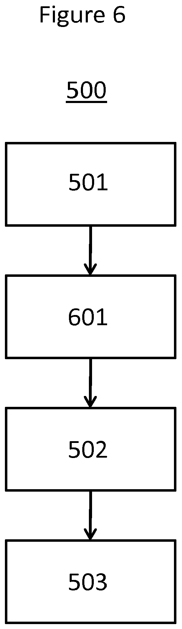

- Figure 6: shows a flow chart of a further process according to the invention for the preparation of a hollow body;

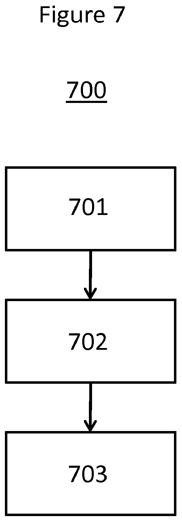

- Figure 7: shows a flow chart of a process according to the invention for packaging a pharmaceutical composition;
- Figure 8a): shows a microscope image of the result of a scratch test performed on a vial of comparative example 1;
- Figure 8b): shows a microscope image of the result of a scratch test performed on a vial of example 1;
- Figure 8c): shows a microscope image of the result of a scratch test performed on a vial of example 5;

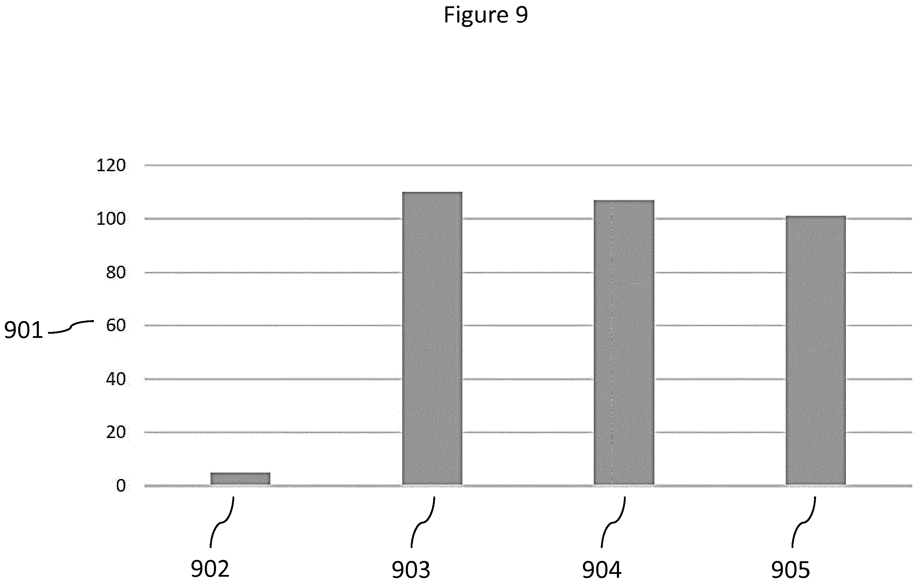

- Figure 9: shows a diagram with results of measurements of the contact angle for wetting with water on vials of example 1;

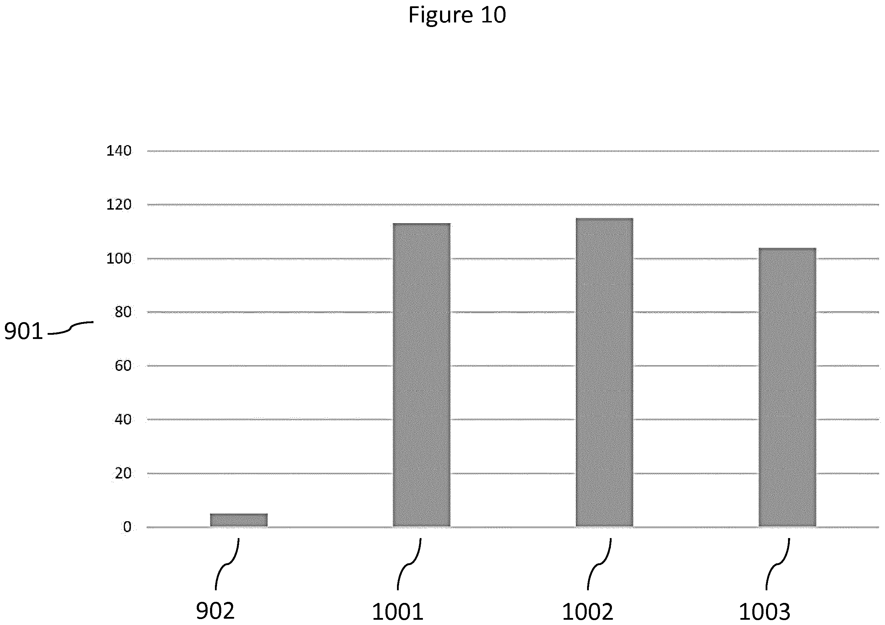

- Figure 10: shows a diagram with results of measurements of the contact angle for wetting with water on vials of example 5;
- Figure 11: shows a schematic depiction of the positions on the interior surface of vials at which the contact angle for wetting with water has been measured in the studies of contamination of the interior surface due to a washing process;
- Figure 12: shows results of the studies of contamination of the interior surface due to a washing process for vials of example 1;
- Figure 13: shows results of the studies of contamination of the interior surface due to a washing process for vials of example 5;
- Figure 14: shows results of measurements of the transmission coefficient of vials according to the examples 1 to 7 and the comparative examples 1 to 3; and

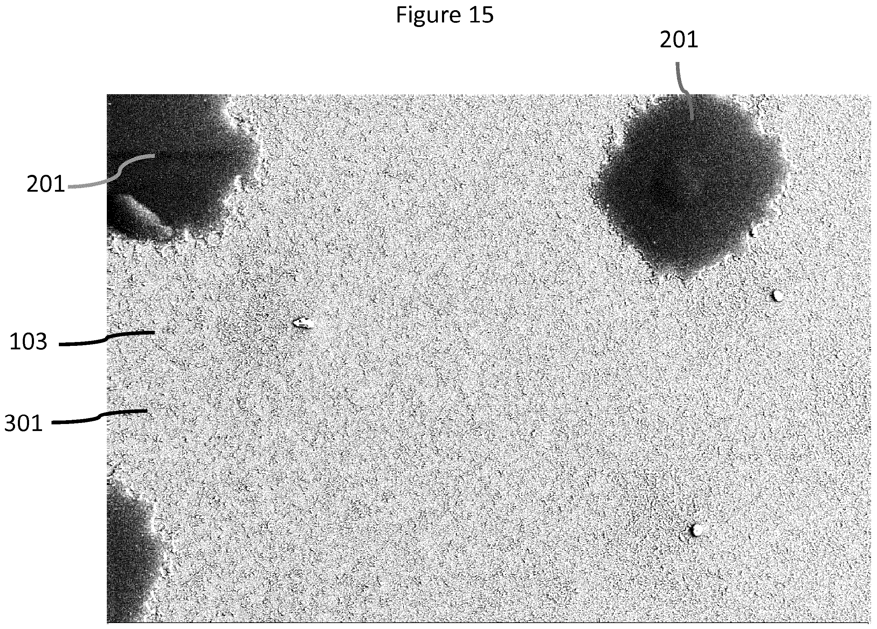

- Figure 15: a microscope image of the exterior surface of a vial according to example 5.

Figure 1 shows a schematic depiction of a hollow body 100 according to the invention. The hollow body 100 comprises a wall 102 which partially surrounds an interior volume 101 of the hollow body 100. The wall 102 surrounds the interior volume 101 only partially in that the hollow body 100 comprises an opening 107. The wall 102 forms from top to bottom in the figure 1: a top region of the hollow body 100, which consists of a flange 108 and a neck 109; a body region 111, which follows the top region via a shoulder 110; and a bottom region 113, which follows the body region 111 via a heel 112. Here, the body region 111 is a lateral region of the hollow body 100 in form of a hollow cylinder. The wall 102 comprises a layer of glass 104 and a wall surface 103, wherein the layer of glass 104 extends across the full area of the wall surface 103. The wall surface 103 consists of an interior surface 106 which faces the interior volume 101, and an exterior surface 105 which faces away from the interior volume 101. In the body region 111, the exterior surface 105 is characterised by a contact angle for wetting with water of at least 80°. The hollow body 100 is a vial for packaging a pharmaceutical composition 401 (not shown).

Figure 2 shows a schematic depiction of a further hollow body 100 according to the invention. The hollow body 100 of figure 2 is a vial which is designed as the vial of figure 1. In addition, the wall 102 of the hollow body 100 of figure 2 comprises a functionalising composition 201, which superimposes the layer of glass 104 on a side of the layer of glass 104 which faces away from the interior volume 1. The functionalising composition 201 consists of 1H,1H,2H,2H-perfluorooctyltriethoxysilane. The hollow body 100 of figure 2 is a vial which has been functionalised according to the above example 1.

Figure 3 shows a schematic depiction of a further hollow body 100 according to the invention. The hollow body 100 of figure 3 is a vial which is designed as the vial of figure 1. In addition, the wall 102 of the hollow body 100 of figure 3 comprises a plurality of particles 301, which are SiO₂-particles, and a functionalising composition 201. The plurality of particles 301 adjoins the layer of glass 104 on a side of the layer of glass 104 facing away from the interior volume 1. The functionalising composition 201 superimposes the layer of glass 104 and the plurality of particles 301 on the same side of the layer of glass 104. Here, the functionalising composition 201 forms regions which each have a diameter in a range from 3 to 20 µm. These regions cover about 18 % of a total surface area of the exterior surface 105 in the body region 111. The hollow body 100 of figure 3 is a vial which has been functionalised according to the above example 5.

Figure 4 shows a schematic depiction of a further hollow body 100 according to the invention. This hollow body 100 is a closed hollow body 400 which has been obtained by filling the hollow body 100 of figure 3 with a pharmaceutical composition 401 and closing the opening 107 with a lid 402.

Figure 5 shows a flow chart of a process 500 according to the invention for the preparation of a hollow body 100. The process 500 comprises a process step a) 501 in which a commercially available glass vial of the type "Vial 2.00 ml Fiolax clear" from Schott AG which of the type 2R according to DIN/ISO 8362 is provided. A process step b) 502 of partially superimposing a layer of glass 104 of the vial with a functionalising solution is conducted as described above for example 1. Also the subsequent step c) 503 of decreasing a proportion of isopropanol in the functionalising solution is conducted as described in the context of example 1. Thereby, the hollow body 100 of figure 2 is obtained.

Figure 6 shows a flow chart of a further process 500 according to the invention for the preparation of a hollow body 100. This particular process 500 comprises a process step a) 501 in which a commercially available glass vial of the type "Vial 2.00 ml Fiolax clear" from Schott AG which of the type 2R according to DIN/ISO 8362 is provided. A further process step 601 of superimposing a plurality of particles 301 on the exterior surface 105 of the vial is conducted as described for example 5 as functionalising with a first functionalising solution which previously has been prepared as provided in example 5. Process steps b) 502 and c) 503 of the process 500 are conducted as the functionalising with the second functionalising solution in example 5. Thereby, the hollow body 100 of figure 3 is obtained.

Figure 7 shows a flow chart of a process 700 according to the invention for packaging a pharmaceutical composition 401. In a process step A) 701, the hollow body 100 according to figure 3 is provided. In a process step B) 702, a pharmaceutical composition 401 is filled into the interior volume 101 of the hollow body 100, and in a process step C) 703 the opening 107 of the hollow body 100 is closed, thereby obtaining the closed hollow body 400 of figure 4, which is also a closed container 400 according to the invention.

Figure 8a) shows a microscope image of the result of a scratch test performed on the exterior surface of a vial of comparative example 1. In the figure, the applied force increases linearly from 0.1 N on the left margin to 30 N on the right margin.

Figure 8b) shows a microscope image of the result of a scratch test performed on the exterior surface of a vial of example 1. In the figure, the applied force increases linearly from 0.1 N on the left margin to 30 N on the right margin.

Figure 8c) shows a microscope image of the result of a scratch test performed on the exterior surface of a vial of example 5. In the figure, the applied force increases linearly from 0.1 N on the left margin to 30 N on the right margin.

Figure 9 shows a diagram with results of measurements of the contact angle 901 for wetting with water on the exterior surface 105 of vials of example 1. The bar 902 shows the measurement results for vials according to comparative example 1 without any post-treatment which is used as a reference. Bar 903 shows the results for vials of example 1 without post-treatment, bar 904 for vials of example 1 after depyrogenisation, and bar 905 for vials of example 1 after the washing procedure.

Figure 10 shows a diagram with results of measurements of the contact angle 901 for wetting with water on the exterior surface 105 of vials of example 5. The bar 902 shows the measurement results for vials according to comparative example 1 without any post-treatment which is used as a reference. Bar 1001 shows the results for vials of example 5 without post-treatment, bar 1002 for vials of example 5 after depyrogenisation, and bar 1003 for vials of example 5 after the washing procedure.

Figure 11 shows a schematic depiction of the positions 1 to 5 on the interior surface 106 of vials at which the contact angle 901 for wetting with water has been measured in the studies of contamination of the interior surface 106 due to the washing procedure.

Figure 12 shows results of the studies of contamination of the interior surface 106 due to the washing procedure for vials of example 1. Here, the contact angle 901 for wetting with water is plotted for each position 1 to 5.

Figure 13 shows results of the studies of contamination of the interior surface due to the washing process for vials of example 5. Here, the contact angle 901 for wetting with water is plotted for each position 1 to 5.

Figure 14 shows results of measurements of the transmission coefficient 1402 of vials according to the examples 1 to 7 and the comparative examples 1 to 3 over the wavelength in nm 1401. In the diagram, 1403 denotes the measurement results for the examples 1 to 7 and comparative examples 1 and 2. All these results are so close to each other that the corresponding graphs appear as one in the diagram. The dip at 865 nm is a measurement artefact. The measurement results for comparative example 3 are denoted by 1404.

Figure 15 a microscope image (magnification of 2,500 times) of the exterior surface 105 of the wall surface 103 of a vial according to example 5. Particles of the plurality of particles 301 can be seen as well as the functionalising composition 201 forming regions of diameters in the range from 3 to 20 µm. These regions cover about 18 % of a total surface area of the exterior surface 105 in the body region 111.

### LIST OF REFERENCE NUMERALS

- **100**: hollow body according to the invention
- **101**: interior volume
- **102**: wall
- **103**: wall surface
- **104**: layer of glass
- **105**: exterior surface
- **106**: interior surface
- **107**: opening
- **108**: flange
- **109**: neck
- **110**: shoulder
- **111**: body region
- **112**: heel
- **113**: bottom region
- **201**: functionalising composition
- **301**: plurality of particles
- **400**: closed container according to the invention / closed hollow body according to the invention
- **401**: pharmaceutical composition
- **402**: lid
- **500**: process according to the invention for the preparation of a hollow body
- **501**: process step a)
- **502**: process step b)
- **503**: process step c)
- **601**: process step of superimposing a plurality of particles
- **700**: process according to the invention for packaging a pharmaceutical composition
- **701**: process step A)
- **702**: process step B)
- **703**: process step C)
- **901**: contact angle for wetting with water in °
- **902**: vials of comparative example 1 without post-treatment
- **903**: vials of example 1 without post-treatment
- **904**: vials of example 1 after depyrogenisation
- **905**: vials of example 1 after washing procedure
- **1001**: vials of example 5 without post-treatment
- **1002**: vials of example 5 after depyrogenisation
- **1003**: vials of example 5 after washing procedure
- **1 to 5**: positions of measurement of the contact angle for wetting with water on the interior surface after the washing procedure
- **1401**: wavelength in nm
- **1402**: transmission coefficient
- **1403**: measurement results for examples 1 to 7 and comparative examples 1 and 2
- **1404**: measurement results for comparative example 3

## Claims

1. A hollow body (100), comprising a wall (102) which at least partially surrounds an interior volume (101) of the hollow body (100);
wherein the wall (102)
a) comprises a layer of glass (104), and
b) has a wall surface (103);
wherein the wall surface (103) comprises a surface region which is **characterised by** a contact angle for wetting with water of at least 80°.

2. The hollow body (100) according to claim 1, wherein the wall surface (103) comprises
a. an interior surface (106) which faces the interior volume (101), and
b. an exterior surface (105) which faces away from the interior volume (101);
wherein the interior surface (106), or the exterior surface (105), or both comprises the surface region.

3. The hollow body (100) according to claim 1, wherein the wall surface (103) comprises
a. an interior surface (106) which faces the interior volume (101), and
b. an exterior surface (105) which faces away from the interior volume (101);
wherein the exterior surface (105) comprises the surface region;
wherein the interior surface (106) is characterised across its full area by a contact angle for wetting with water of less than 80°

4. The hollow body (100) according to any of the preceding claims, wherein the surface region is further **characterised by** a contact angle for wetting with n-hexadecane of at least 30°.

5. A process (500) of making the hollow body (100) according to any of the preceding claims, the process (500) comprising as process steps
a) providing a hollow body, comprising a wall (102) which at least partially surrounds an interior volume (101) of the hollow body,
wherein the wall (102)
i) comprises a layer of glass (104), and
ii) has a wall surface (103);
b) superimposing at least a part of the layer of glass (104) with a functionalising composition precursor, comprising
i) an organic compound comprising F, and
ii) a vehicle;
and
c) decreasing a proportion of the vehicle in the functionalising composition precursor, thereby obtaining a functionalising composition which at least partially superimposes the layer of glass (104) in a functionalised region.

6. The process (500) according to claim 5, wherein the organic compound further comprises S or Si or both.

7. The process (500) according to claim 5 or 6, wherein the functionalising composition precursor further comprises a plurality of particles (301).

8. The process (500) according to claim 5 or 6, wherein prior to the process step b) the layer of glass (104) is at least partially superimposed by a plurality of particles (301) at the at least part of the layer of glass (104).

9. The process (500) according to claim 7 or 8, wherein the particles of the plurality of particles (301) are inorganic particles.

10. The process (500) according to claim 9, wherein the inorganic particles comprise one selected from the group consisting of a boron nitride, molybdenum sulphide, a silicone nitride, and an oxide; or a combination of at least two thereof.

11. A closed container (400) comprising the hollow body (100) according to any of claims 1 to 4;
wherein the interior volume (101) comprises a pharmaceutical composition (401);
wherein the surface region faces away from the interior volume (101).

12. A process (700) comprising as process steps
A) providing the hollow body (100) according to any of the claims 1 to 4;
B) inserting a pharmaceutical composition (401) into the interior volume (101); and
C) closing the hollow body (100).

13. A use of the hollow body (100) according to any of the claims 1 to 4 for packaging a pharmaceutical composition (401).

14. A use of a perfluorinated silane or a perfluorosulfonic acid or both for functionalising a surface of glass of a container by the process according to any of the claims 5 to 10, wherein the perfluorinated silane or a perfluorosulfonic acid or both is the organic compound comprising F.

## Patentansprüche

1. Hohlkörper (100), umfassend eine Wand (102), die ein Innenvolumen (101) des Hohlkörpers (100) zumindest teilweise umgibt;
wobei die Wand (102)
a) eine Schicht aus Glas (104) umfasst, und
b) hat eine Wandfläche (103);
wobei die Wandoberfläche (103) einen Oberflächenbereich aufweist, der durch einen Kontaktwinkel zur Benetzung mit Wasser von mindestens 80° gekennzeichnet ist.

2. Hohlkörper (100) nach Anspruch 1, wobei die Wandfläche (103) umfasst
a. eine Innenfläche (106), die dem Innenvolumen (101) zugewandt ist, und
b. eine Außenfläche (105), die vom Innenvolumen (101) abgewandt ist;
wobei die Innenfläche (106) oder die Außenfläche (105) oder beide den Oberflächenbereich umfassen.

3. Hohlkörper (100) nach Anspruch 1, wobei die Wandfläche (103) umfasst
a. eine Innenfläche (106), die dem Innenvolumen (101) zugewandt ist, und
b. eine Außenfläche (105), die vom Innenvolumen (101) abgewandt ist;
wobei die Außenfläche (105) den Oberflächenbereich umfasst;
wobei die innere Oberfläche (106) über ihre gesamte Fläche durch einen Kontaktwinkel zur Benetzung mit Wasser von weniger als 80° gekennzeichnet ist

4. Hohlkörper (100) nach einem der vorhergehenden Ansprüche, wobei der Oberflächenbereich weiterhin durch einen Kontaktwinkel zur Benetzung mit n-Hexadecan von mindestens 30° gekennzeichnet ist.

5. Verfahren (500) zur Herstellung des Hohlkörpers (100) nach einem der vorhergehenden Ansprüche, wobei das Verfahren (500) als Verfahrensschritte umfasst
a) Bereitstellen eines Hohlkörpers, umfassend eine Wand (102), die ein Innenvolumen (101) des Hohlkörpers zumindest teilweise umgibt,
wobei die Wand (102)
i) eine Schicht aus Glas (104) umfasst, und
ii) hat eine Wandfläche (103);
b) Überlagern von mindestens einem Teil der Glasschicht (104) mit einem funktionalisierenden Zusammensetzungsvorläufer, umfassend
i) eine organische Verbindung, die F enthält, und
ii) ein Vehikel;
und
c) Verringern eines Anteils des Vehikels in dem Funktionalisierungszusammensetzungsvorläufer, wodurch eine Funktionalisierungszusammensetzung erhalten wird, die die Glasschicht (104) in einem funktionalisierten Bereich zumindest teilweise überlagert.

6. Verfahren (500) nach Anspruch 5, wobei die organische Verbindung weiterhin S oder Si oder beides umfasst.

7. Verfahren (500) nach Anspruch 5 oder 6, wobei der Vorläufer der Funktionalisierungszusammensetzung ferner eine Vielzahl von Partikeln (301) umfasst.

8. Verfahren (500) nach Anspruch 5 oder 6, wobei vor dem Verfahrensschritt b) die Glasschicht (104) zumindest teilweise mit einer Vielzahl von Partikeln (301) überlagert wird.

9. Verfahren (500) nach Anspruch 7 oder 8, wobei die Partikel der Vielzahl von Partikeln (301) anorganische Partikel sind.

10. Verfahren (500) nach Anspruch 9, wobei die anorganischen Teilchen eines umfassen, das aus der Gruppe ausgewählt ist, die aus einem Bornitrid, Molybdänsulfid, einem Siliconnitrid und einem Oxid oder einer Kombination von mindestens zwei davon besteht.

11. Geschlossener Behälter (400) mit dem Hohlkörper (100) nach einem der Ansprüche 1 bis 4;
wobei das Innenvolumen (101) eine pharmazeutische Zusammensetzung (401) enthält; wobei der Oberflächenbereich dem Innenvolumen (101) abgewandt ist.

12. Ein Verfahren (700), das als Verfahrensschritte umfasst
A) Bereitstellen des Hohlkörpers (100) nach einem der Ansprüche 1 bis 4;
B) Einbringen einer pharmazeutischen Zusammensetzung (401) in das Innenvolumen (101); und
C) Schließen des Hohlkörpers (100).

13. Verwendung des Hohlkörpers (100) nach einem der Ansprüche 1 bis 4 zum Verpacken einer pharmazeutischen Zusammensetzung (401).

14. Verwendung eines perfluorierten Silans oder einer Perfluorsulfonsäure oder beider zur Funktionalisierung einer Glasoberfläche eines Behälters durch das Verfahren nach einem der Ansprüche 5 bis 10, wobei das perfluorierte Silan oder eine Perfluorsulfonsäure oder beide die organische Verbindung ist, die F aufweist.

## Revendications

1. Un corps creux (100), comprenant une paroi (102) qui entoure au moins partiellement un volume intérieur (101) du corps creux (100) ;
où la paroi (102)
a) comprend une couche de verre (104), et
b) a une surface de paroi (103) ;
dans laquelle la surface de la paroi (103) comprend une zone de surface qui est **caractérisée par** un angle de contact pour le mouillage avec l'eau d'au moins 80°.

2. Le corps creux (100) selon la revendication 1, dans lequel la surface de la paroi (103) comprend
a. une surface intérieure (106) qui fait face au volume intérieur (101), et
b. une surface extérieure (105) qui fait face à l'opposé du volume intérieur (101) ;
où la surface intérieure (106), ou la surface extérieure (105), ou les deux, constituent la région de surface.

3. Le corps creux (100) selon la revendication 1, dans lequel la surface de la paroi (103) comprend
a. une surface intérieure (106) qui fait face au volume intérieur (101), et
b. une surface extérieure (105) qui fait face à l'opposé du volume intérieur (101) ;
où la surface extérieure (105) comprend la région de surface ;
dans laquelle la surface intérieure (106) est **caractérisée** sur toute sa surface par un angle de contact pour le mouillage avec l'eau inférieur à 80

4. Le corps creux (100) selon l'une des revendications précédentes, dans lequel la zone de surface est en outre **caractérisée par** un angle de contact pour le mouillage avec le n-hexadécane d'au moins 30°.

5. Un procédé (500) de fabrication du corps creux (100) selon l'une des revendications précédentes, le procédé (500) comprenant comme étapes
a) fournir un corps creux, comprenant une paroi (102) qui entoure au moins partiellement un volume intérieur (101) du corps creux,
où la paroi (102)
i) comprend une couche de verre (104), et
ii) a une surface de paroi (103) ;
b) superposer au moins une partie de la couche de verre (104) avec un précurseur de composition fonctionnalisante, comprenant
i) un composé organique comprenant F, et
ii) un véhicule ;
et
c) diminuer une proportion du véhicule dans le précurseur de la composition fonctionnalisante, obtenant ainsi une composition fonctionnalisante qui superpose au moins partiellement la couche de verre (104) dans une région fonctionnalisée.

6. Procédé (500) selon la revendication 5, dans lequel le composé organique comprend en outre S ou Si ou les deux.

7. Le procédé (500) selon la revendication 5 ou 6, dans lequel le précurseur de la composition fonctionnalisante comprend en outre une pluralité de particules (301).

8. Procédé (500) selon la revendication 5 ou 6, dans lequel, avant l'étape b) du procédé, la couche de verre (104) est au moins partiellement superposée par une pluralité de particules (301) sur la partie au moins de la couche de verre (104).

9. Le procédé (500) selon la revendication 7 ou 8, dans lequel les particules de la pluralité de particules (301) sont des particules inorganiques.

10. Procédé (500) selon la revendication 9, dans lequel les particules inorganiques comprennent une particule choisie dans le groupe constitué par un nitrure de bore, un sulfure de molybdène, un nitrure de silicone et un oxyde ; ou une combinaison d'au moins deux de ceux-ci.

11. Un récipient fermé (400) comprenant le corps creux (100) selon l'une des revendications 1 à 4 ;
dans lequel le volume intérieur (101) comprend une composition pharmaceutique (401) ;
où la zone de surface est orientée à l'opposé du volume intérieur (101).

12. Un processus (700) comprenant comme étapes de processus
A) fournir le corps creux (100) selon l'une des revendications 1 à 4 ;
B) l'insertion d'une composition pharmaceutique (401) dans le volume intérieur (101)
C) la fermeture du corps creux (100).

13. Utilisation du corps creux (100) selon l'une des revendications 1 à 4 pour le conditionnement d'une composition pharmaceutique (401).

14. Utilisation d'un silane perfluoré ou d'un acide perfluorosulfonique ou des deux pour fonctionnaliser une surface de verre d'un récipient par le procédé selon l'une quelconque des revendications 5 à 10, dans laquelle le silane perfluoré ou un acide perfluorosulfonique ou les deux sont le composé organique comprenant F.
